# EUROPEAN PATENT APPLICATION

(11) **EP 3 910 506 A1**
(43) Date of publication of application: **17.11.2021**
(21) Application number: 21171680.8
(22) Date of filing: 30.04.2021
(51) Int. Cl.: G06F 21/10

(54) **SYSTEM AND METHOD FOR PROVIDING SERVICE, AND CARRIER MEANS**

(30) Priority: 11.05.2020 JP 2020083300
(71) Applicant: Ricoh Company, Ltd., Tokyo 143-8555 (JP)
(72) Inventor: UCHIBORI, Hiroki, Tokyo, 143-8555 (JP)
(74) Representative: White, Duncan Rohan

(57) **Abstract**

A system (50) includes a license management unit that determines whether a license for an application has been issued to both a user and an electronic device, assigns use permission of the application to each of the user and the electronic device, based on a determination that a license for the application has been issued to both the user and the electronic device, and when use permission of the application has been assigned to both the user and the electronic device, permits the user who has logged in to the electronic device to use the application.

## Description

### BACKGROUND

### Technical Field

The present disclosure relates to a system and method for providing a service, and carrier means.

### Description of the Related Art

A service providing system that provides a user with a service using an application via a network is known. A user prepares a terminal device or an electronic device such as a personal computer (PC) and a certain environment such as a Web browser that operates on such a device to use a service that is provided in the form of a Web application that is provided by the service providing system through the terminal device or the electronic device.

For example, a company as an organization may make a contract to use a service that is provided by such a service providing system, and a person who belongs to the organization as a user may use the service. The organization or the like on the contact for the service is managed in units referred to as a tenant. When a user (a member of a company or the like) uses the service, the user is required to be registered in the tenant. For example, a tenant administrator may register the user in the tenant.

The service providing system can limit the number of users who use an application in accordance with the content of the contract such as the number of licenses. Japanese Unexamined Patent Application Publication No. 2016-027446 discloses a method for setting use permission of an application to users the number of which is less than or equal to the upper limit of the number of users determined in the contract.

A license contract may be made on an electronic device owned by a tenant. JP-2019-061383-A discloses a method for confirming the upper limit of the number of available electronic devices when an electronic device with which a user intends to use an application does not have use permission of the application and giving use permission to the electronic device if there is remaining use permission.

With the existing technique, however, when use permission is assigned to a user, there is a disadvantage that it is difficult to limit electronic devices capable of using an application. When use permission is given to an electronic device, there is a disadvantage that it is difficult to limit users capable of using an application.

### SUMMARY

In one exemplary aspect, a system includes a license management unit that determines whether a license for an application has been issued to both a user and an electronic device, assigns use permission of the application to each of the user and the electronic device, based on a determination that a license for the application has been issued to both the user and the electronic device, and when use permission of the application has been assigned to both the user and the electronic device, permits the user who has logged in to the electronic device to use the application.

In one exemplary aspect, a service providing method is provided, which includes: determining whether a license for an application has been issued to both a user and an electronic device; assigning use permission of the application to each of the user and the electronic device, when the determining determines that the license has been issued to both the user and the electronic device; and permitting the user who has logged in to the electronic device to use the application, when use permission of the application has been assigned to both the user and the electronic device.

In one exemplary aspect, carrier means is provided, such as a recording medium which causes a computer system to carry out the above-described method.

With the above-descried configuration, the system is able to permit use of an application based on a license relating to a user and a license relating to an electronic device.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 illustrates an overview of an operation of a service providing system of an embodiment;
FIG. 2 is a configuration diagram of an example of the service providing system;
FIG. 3 is a hardware configuration diagram of an example of a computer;
FIG. 4 is a hardware configuration diagram of an example of an image forming device;
FIGs. 5A and 5B (FIG. 5) are an example of a functional block diagram when functions of a first terminal device, a second terminal device, a third terminal device, an electronic device, and an information processing system are described while being divided into blocks;
FIG. 6 is an example of an information relation diagram;
FIG. 7 illustrates relations among pieces of information when a tenant makes a contract for a package;
FIGs. 8A and 8B (FIG. 8) an example of a sequence diagram describing operations or processes of the service providing system when a person in charge of work creates a package;
FIG. 9 illustrates an example of a login screen;
FIG. 10 illustrates an example of a menu screen for the person in charge of work, the menu screen being displayed by the third terminal device;
FIG. 11 illustrates an example of a package information input screen displayed by the third terminal device;
FIG. 12 illustrates an example of an application selection screen displayed by the third terminal device;
FIG. 13 illustrates an example of a license definition creation screen displayed by the third terminal device;
FIGs. 14A and 14B (FIG. 14) an example of a sequence diagram illustrating a procedure of the information processing system to issue contract information, service information, and license information when the person in charge of work associates a tenant that has purchased a package with the package;
FIG. 15 illustrates an example of a tenant list screen displayed by the third terminal device;
FIG. 16 illustrates an example of a package selection screen displayed by the third terminal device;
FIG. 17 illustrates an example of a contract information input screen displayed by the third terminal device;
FIG. 18 illustrates a contract information input screen when the type of license is a user license;
FIG. 19 illustrates a contract information input screen when the type of license is a device license;
FIGs. 20A and 20B (FIG. 20) are an example of a sequence diagram illustrating a procedure of a tenant administrator to assign use permission to a user and an electronic device;
FIG. 21 illustrates an example of a menu screen for a tenant administrator (end user) displayed by the first terminal device;
FIG. 22 illustrates an example of an application use permission setting (user) screen displayed by the first terminal device;
FIG. 23 illustrates an example of a confirmation screen after the application use permission setting (user) displayed by the first terminal device;
FIG. 24 illustrates an example of an application use permission setting (device) screen displayed by the first terminal device;
FIG. 25 illustrates an example of a confirmation screen after the application use permission setting (device) displayed by the first terminal device;
FIGs. 26A and 26B (FIG. 26) are an example of a sequence diagram describing operations or processes when a general user uses an application using an electronic device;
FIG. 27 is an example of a flowchart describing a process in step S102 in FIG. 26;
FIG. 28 illustrates an example of an application list screen displayed by an electronic device to which the general user has logged in;
FIG. 29 illustrates an example of an application screen displayed by the electronic device;
FIGs. 30A and 30B (FIG. 30) are an example of a sequence diagram describing operations or processes when the general user uses an application using the electronic device;
FIG. 31 illustrates an example of a login screen corresponding to a login method in FIG. 30; and
FIG. 32 illustrates examples of an application launcher icon screen and an application list screen.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result. Referring now to the drawings, embodiments of the present disclosure are described below. As used herein, the singular forms "a," "an," and "the" are intended to include the plural forms as well, unless the context clearly indicates otherwise.

A service providing system and a service providing method that is performed by the service providing system are described below as examples of embodiments to implement the present disclosure.

### Overview of Operations

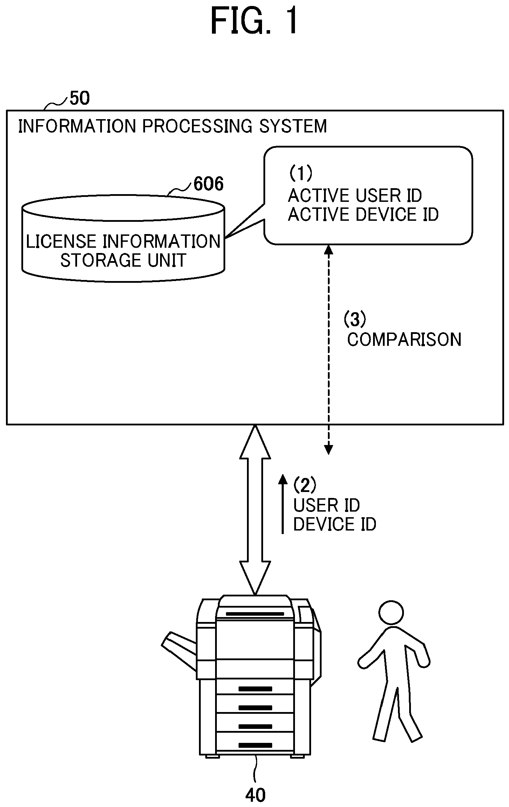

FIG. 1 illustrates an overview of operations of a service providing system of an embodiment.
(1) An information processing system 50 stores license information registered by a person in charge of work. The license information has an active user ID and an active device ID of an application on a tenant basis. The number of users and the number of electronic devices 40 allowed to be registered in the license information are determined in accordance with the purchased license.
(2) When a user logs in to an electronic device 40, the user ID is specified. The device ID held by the electronic device 40 is transmitted to the information processing system 50 through device authentication, and the electronic device 40 is also specified.
(3) The information processing system 50 permits use of an application when the user ID of the user of the electronic device 40 has been registered in the license information and when the device ID of the electronic device 40 has been registered in the license information.

As described above, the service providing system of the present embodiment can limit the use permission of an application based on the license of a user and the license of an electronic device 40. Thus, it is possible to limit electronic devices capable of using the application and further limit users capable of using the application.

In this disclosure, a tenant represents information indicating a customer who shares software among a plurality of customers, that is, a company or the like that is a group of customers. Each user in the tenant can use a package under a contract with the tenant. A tenant administrator or the like of the tenant can give use permission of a plurality of software instances (a package or each application included in the package) present in the system to the user.

An application is a program that is executed by a terminal device and an information processing device for a user to receive a service. The program that is executed cooperatively by the terminal device and the information processing device is also referred to as a Web application. Examples of the application include a work flow application that sequentially executes a series of processes. A tenant administrator or the like combines components to construct an application. For example, a component of reading a document and a component of transmission to a cloud are combined to construct an application of uploading and saving a document read by an electronic device 40 to and in a storage on a cloud.

A package is at least one application that is sold as a set. A set may include one application, or may include a plurality of applications that are collectively sold as applications frequently used for work or applications relating to each other in view of usability of the user.

A role is a role in a tenant. The role has permission corresponding to the role. For example, the tenant administrator determines permission in consideration with the type of job of a user, the job title of the user, how the user uses the application, and so forth. The role of the user may meet the role of the package or may differ from the role of the package. When the role of the user has greater permission than that of the role of the package, use permission of the package can be assigned to the user.

A person in charge of work is a person who creates a package. The person in charge of work is in many cases a person belonging to a service provider.

An electronic device 40 is a device that executes an application using functions of the electronic device 40. For example, the electronic device 40 executes an application of registering image data generated by the electronic device 40 reading a document, on a cloud. The electronic device 40 may be referred to as a device in the present embodiment.

A license represents to permit a behavior that may be illegal without the license. In the present embodiment, a license that uses a package is described as an example. A license is purchased by a tenant. Use permission based on a license is assigned to a user or an electronic device. A target (user, electronic device, or both) to which use permission is assigned is determined when a license is purchased. Examples of the license include a user license that is assigned to a user, a device license that is assigned to an electronic device, and a user device license that is assigned to both.

Assigning use permission of an application represents enabling each user or electronic device to use an application within the range of a license.

### System Configuration Example

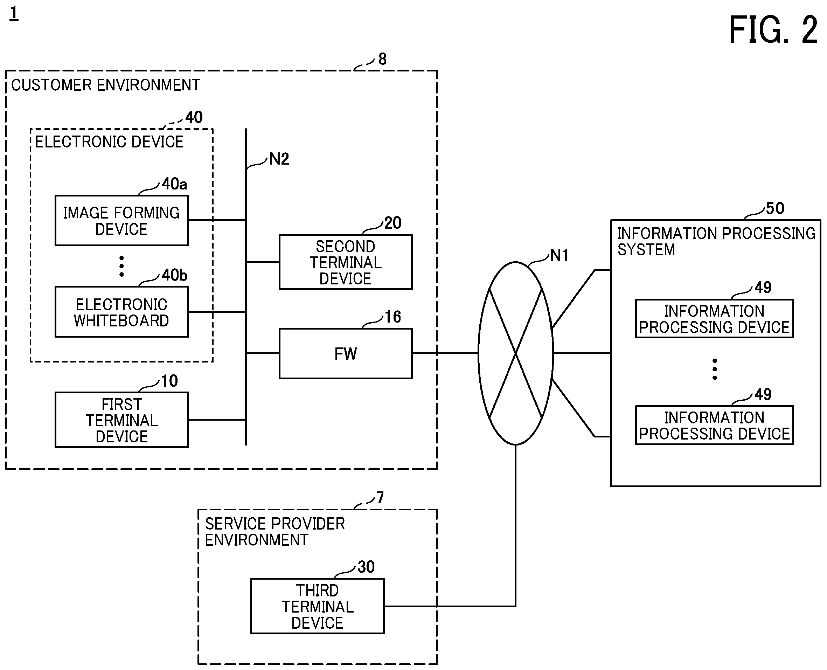

FIG. 2 is a configuration diagram of an example of a service providing system 1 according to the present embodiment. In the service providing system 1 in FIG. 2, a customer environment 8 and a service provider environment 7 are connected to the information processing system 50 via a network N1 such as the Internet. The network N1 includes a telephone line such as a mobile phone network.

A customer is a customer of a service that is provided by the information processing system 50, and examples of the customer include organizations such as a company, a group, an educational institution, an administrative organ, and a department. One having a certain employment relationship with any of the customers is referred to as a user. In the customer environment 8, at least one electronic device 40, a first terminal device 10, a second terminal device 20, and a firewall 16 are connected to one another via a network N2 such as a local area network (LAN). The information processing system 50 includes at least one information processing device 49 connected to the network N1. A service provider is a dealer that provides a service to a customer. The service provider environment 7 involves a third terminal device 30.

Examples of the electronic device 40 include an image forming device 40a. Examples of the image forming device 40a include a laser printer, a multifunction printer, and an MFP, which is an abbreviation of a multi-function peripheral, a multi-function product, or a multi-function printer. Examples of the electronic device 40 also include an electronic whiteboard 40b. Examples of the electronic device 40 further include a projector (PJ), an output device of digital signage or the like, a head up display (HUD) device, an industrial machine, an image capturing device, a sound collecting device, a medical device, a network home appliance, an automobile (connected car), a notebook PC, a mobile phone, a smart phone, a tablet terminal, a game machine, a personal digital assistant (PDA), a digital camera, a wearable PC, and a desktop PC.

The electronic device 40 of the present embodiment is a terminal with which a user registered in the information processing system 50 uses a service. The user logs in to the information processing system 50 from the electronic device 40, selects an application (application software) of which use permission is given to the user, and receives a service provided by the information processing system 50. The service is provided on an application basis in this way.

The first terminal device 10 is an information processing device that is used by a tenant administrator. Examples of the first terminal device 10 include a smart phone, a mobile phone, a tablet PC, a desktop PC, and a notebook PC. The first terminal device 10 has installed therein a program such as a Web browser having a screen display function. It is sufficient that the program has a function of displaying, as a screen, screen information received from the information processing device, and the program is not limited to the Web browser. The program may be a program dedicated to the information processing system 50.

The second terminal device 20 is an information processing device that is used by a user. Examples of the second terminal device 20 include a smart phone, a mobile phone, a tablet PC, a desktop PC, and a notebook PC. The second terminal device 20 has installed therein a program such as a Web browser having a screen display function. It is sufficient that the program has a function of displaying, as a screen, screen information received from the information processing device, and the program is not limited to the Web browser. The program may be a program dedicated to the information processing system 50.

The third terminal device 30 is an information processing device that is used by a person in charge of work. Examples of the third terminal device 30 include a smart phone, a mobile phone, a tablet PC, a desktop PC, and a notebook PC. The third terminal device 30 has installed therein a program such as a Web browser having a screen display function. It is sufficient that the program has a function of displaying, as a screen, screen information received from the information processing device, and the program is not limited to the Web browser. The program may be a program dedicated to the information processing system 50.

The firewall 16 is a device for preventing invasion from the outside to the customer environment 8. The firewall 16 monitors all communication from the customer environment 8. The firewall 16, however, may monitor not all of communication when the first terminal device 10, the second terminal device 20, or the third terminal device 30 communicates with the information processing system 50 using a telephone line such as a mobile phone network.

The information processing system 50 provides various services to the electronic device 40 and the second terminal device 20 and so forth. The services vary depending on the type of the electronic device 40. The services for the image forming device 40a include a service of uploading a read document to a storage on a cloud to save the document, and a service of downloading image data from the storage on the cloud to print the image data, however are not limited thereto. The services for the electronic whiteboard 40b include, for example, a service of recognizing voice and creating a record of proceedings in real time, and a service of converting hand written data into text data. The services for the second terminal device 20 include, for example, a real-time translation service for a Web page.

In the information processing system 50, a tenant is associated with a user. A service (application) that can be used by a user is determined in accordance with the role of the user. The user uses an application that the user can use from the electronic device 40 or the second terminal device 20. A tenant, a tenant administrator, and a user have the following relationship.
One customer belongs to one tenant. That is, a tenant administrator and a user belong to one tenant.
One customer belongs to a plurality of tenants. That is, a tenant administrator does not necessarily belong to a tenant, and manages each tenant and a user belonging to the corresponding tenant. A user belongs to at least one tenant.

In any of the cases, a user registered in the information processing system 50 belongs to one of tenants. After the user is registered, when the user is specified, the tenant to which the user belongs is also specified. When one customer corresponds to one tenant, and when a tenant administrator logs in to a tenant, the tenant is automatically determined (it is not required to designate a tenant). When one customer corresponds to a plurality of tenants, a tenant administrator may designate a tenant at the time of logging in (or the tenant administrator has different accounts for tenants).

The information processing system 50 creates screen information for a Web page to be displayed by the first terminal device 10, the second terminal device 20, the third terminal device 30, or the electronic device 40, and transmits the screen information thereto. For example, a package new creation screen, a user information registration screen, a package assignment screen, and a login screen, which are described later, are displayed.

The screen information is created using HyperText Markup Language (HTML), Extensible Markup Language (XML), Cascading Style Sheets (CSS), JavaScript (registered trademark), and so forth. A Web page may be provided by a Web application. The Web application is software or a scheme of the software that is operated through cooperation of a program using a programming language (for example, JavaScript (registered trademark)) operating on a Web browser and a program operating on a Web server, and that is executed on a Web browser. The Web application can dynamically change a Web page.

The information processing system 50 may support cloud computing. Cloud computing refers to a use form in which resources on a network are used without being aware of a specific hardware resource. The information processing system 50 supporting cloud computing may be referred to as a cloud system. The cloud system may be on the Internet or may be on-premises.

The configuration of the service providing system 1 illustrated in FIG. 2 is an example, and one or more server devices (such as a proxy server or a gateway server) may be interposed between the customer environment and the information processing device. The first terminal device 10 and the second terminal device 20 may be located outside the customer environment, and may be connected to the network N1, for example. The third terminal device 30 may be located outside the service provider environment, and may be connected to the network N1, for example.

The information processing system 50 may be implemented by one information processing device 49 or may be provided by being distributed to a plurality of information processing devices 49. For example, an information processing device 49 may provide a service, an information processing device 49 may provide a plurality of services, or a plurality of information processing devices 49 may provide a service.

In the service providing system 1 of FIG. 2, the information processing device is connected to the network N1 such as the Internet outside the customer environment. In other words, the service providing system 1 in FIG. 2 is an example in which the information processing system 50 is provided in the cloud environment. Alternatively, the information processing system 50 may be provided inside the customer environment (on-premise environment).

### Hardware Configuration Example

### Computer

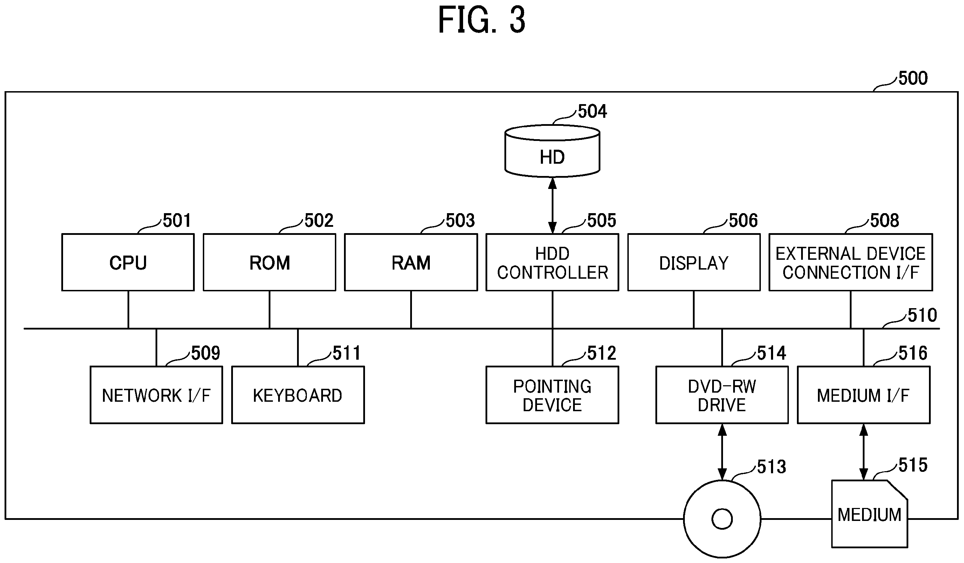

The first terminal device 10, the second terminal device 20, the third terminal device 30, or the information processing system 50 illustrated in FIG. 2 is implemented by, for example, a computer having a hardware configuration illustrated in FIG. 3. FIG. 3 is a hardware configuration diagram of an example of a computer. A computer 500 in FIG. 3 is constructed by a computer. As illustrated in FIG. 3, the computer 500 includes a central processing unit (CPU) 501, a read-only memory (ROM) 502, a random access memory (RAM) 503, a hard disk (HD) 504, a hard disk drive (HDD) controller 505, a display 506, an external device connection interface (I/F) 508, a network I/F 509, a bus line 510, a keyboard 511, a pointing device 512, a digital versatile disk rewritable (DVD-RW) drive 514, and a medium I/F 516.

Among these components, the CPU 501 controls the entire operation of the computer. The ROM 502 stores a control program such as an initial program loader (IPL) to boot the CPU 501. The RAM 503 is used as a work area for the CPU 501. The HD 504 stores various data such as a program. The HDD controller 505 controls reading or writing of various data from or to the HD 504 under control of the CPU 501. The display 506 displays various types of information such as a cursor, a menu, a window, characters, or an image. The external device connection I/F 508 is an interface that couples the computer to various external devices. Examples of the external devices include a Universal Serial Bus (USB) memory and a printer. The network I/F 509 is an interface that controls communication of data with an external device through a communication network such as the communication network N1. The bus line 510 may be an address bus or a data bus, which electrically couples various elements such as the CPU 501 illustrated in FIG. 3.

The keyboard 511 is an example of an input device provided with a plurality of keys for allowing a user to input characters, numerals, or various instructions. The pointing device 512 is an example of an input device that allows a user to select or execute a specific instruction, select a target for processing, or move a cursor being displayed. The DVD-RW drive 514 reads or writes various data from or to a DVD-RW 513, which is an example of a removable storage medium (carrier means). The removable storage medium is not limited to the DVD-RW and may be a digital versatile disk recordable (DVD-R) or the like. The medium I/F 516 controls reading or writing (storing) of data from or to a storage medium 515 such as a flash memory.

### Image Forming Device

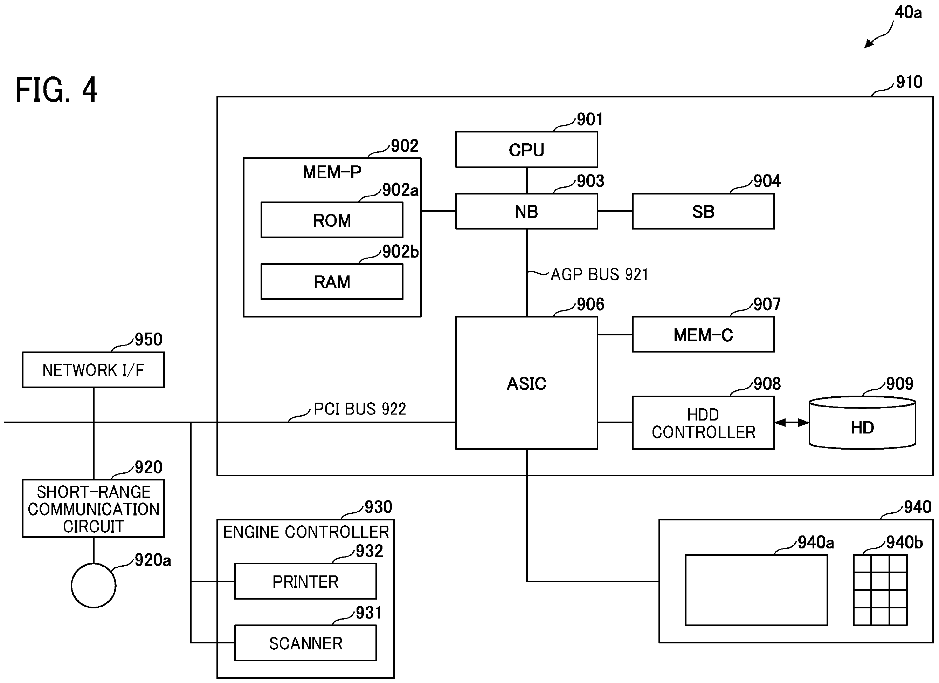

FIG. 4 is a hardware configuration diagram of an example of an image forming device 40a. As illustrated in FIG. 4, the image forming device 40a includes a controller 910, a short-range communication circuit 920, an engine controller 930, an operation panel 940, and a network I/F 950.

The controller 910 among these components includes a CPU 901 as a main part of the computer, a system memory (MEM-P) 902, a northbridge (NB) 903, a southbridge (SB) 904, an application specific integrated circuit (ASIC) 906, a local memory (MEM-C) 907 as a memory, an HDD controller 908, and an HD 909 as a memory, and the NB 903 and the ASIC 906 are coupled by an accelerated graphics port (AGP) bus 921.

The CPU 901 among these components is a controller that performs overall control of the image forming device 40a. The NB 903 is a bridge for coupling the CPU 901 to the MEM-P 902, the SB 904, and the AGP bus 921, and includes a memory controller that controls reading or writing from or to the MEM-P 902, a peripheral component interconnect (PCI) master, and an AGP target.

The MEM-P 902 includes a ROM 902a that is a memory for storing a program and data to implement each function of the controller 910, and a RAM 902b that is used as a memory for drawing when developing the program and data and printing data from the memory. The program stored in the RAM 902b may be provided by being recorded in a computer-readable storage medium such as a compact disk read-only memory (CD-ROM), a compact disk recordable (CD-R), or a DVD in a file of an installable format or an executable format.

The SB 904 is a bridge for coupling the NB 903 to a PCI device and a peripheral device. The ASIC 906 is an integrated circuit (IC) for image processing having hardware elements for image processing, and serves as a bridge coupling the AGP bus 921, a PCI bus 922, the HDD controller 908, and the MEM-C 907 with each other. The ASIC 906 includes a PCI target and an AGP master, an arbiter (ARB) serving as a core of the ASIC 906, a memory controller that controls the MEM-C 907, a plurality of direct memory access controllers (DMACs) that rotate image data using hardware logic or the like, and a PCI unit that transfers data to and from a scanner 931 and a printer 932 via the PCI bus 922. A USB interface or an Institute of Electrical and Electronics Engineers 1394 (IEEE 1394) interface may be coupled to the ASIC 906.

The MEM-C 907 is a local memory used as a copy image buffer and a code buffer. The HD 909 is a storage for storing image data, font data used for printing, and forms. The HD 909 controls reading or writing from or to the HD 909 according to the control of the CPU 901. The AGP bus 921 is a bus interface for a graphics accelerator card proposed for speeding up graphic processing, and can speed up the graphics accelerator card by directly making an access to the MEM-P 902 with high throughput.

The short-range communication circuit 920 includes a short-range communication circuit antenna 920a. The short-range communication circuit 920 is a communication circuit of Near Field Communication (NFC), Bluetooth (registered trademark), or the like.

The engine controller 930 includes the scanner 931 and the printer 932. The operation panel 940 includes a panel display 940a such as a touch panel for displaying current setting values, a selection screen, and so forth and for receiving input from an operator, and a hard key 940b including a numeric keypad for receiving setting values of conditions relating to image formation such as a density setting condition and a start key for receiving a copy start instruction. The controller 910 controls the entire image forming device 40a, and controls, for example, drawing, communication, and input from the operation panel 940. The scanner 931 or the printer 932 includes an image processor for error diffusion or gamma conversion.

The image forming device 40a can sequentially switch and select a document box function, a copy function, a printer function, and a facsimile function by an application switching key of the operation panel 940. When the document box function is selected, a document box mode is set, when the copy function is selected, a copy mode is set, when the printer function is selected, a printer mode is set, and when the facsimile function is selected, a facsimile mode is set.

The network I/F 950 is an interface that controls communication of data with an external device through the communication network N1. The short-range communication circuit 920 and the network I/F 950 are electrically coupled to the ASIC 906 via the PCI bus 922.

### Functions

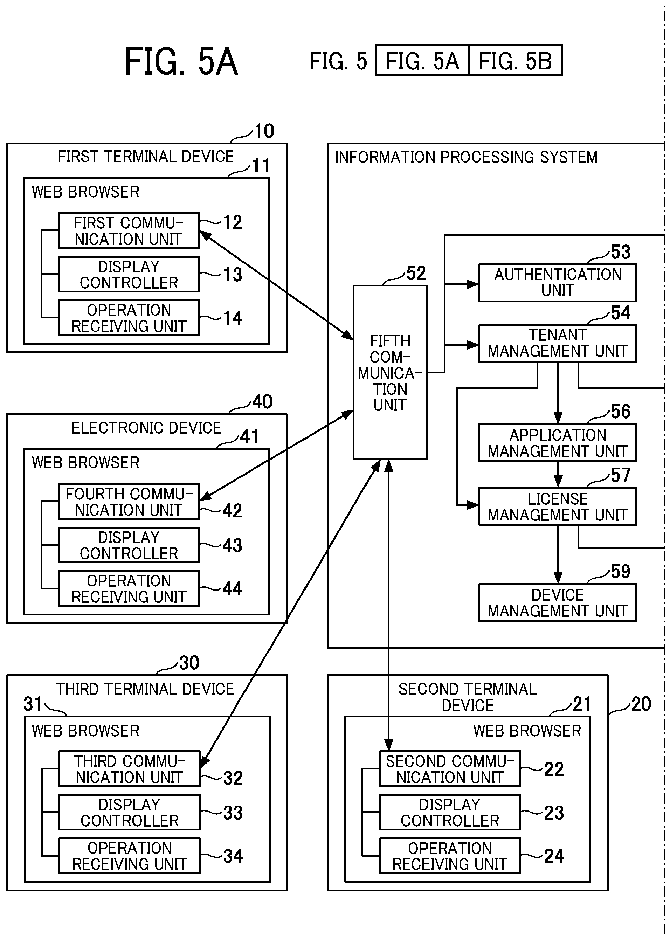

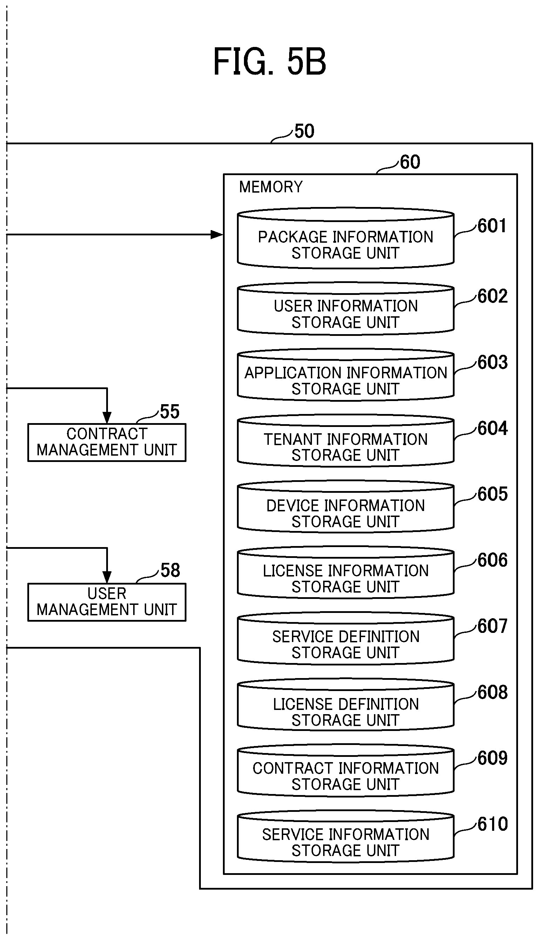

The functions of the devices included in the service providing system 1 according to the present embodiment are implemented by, for example, processing blocks illustrated in FIG. 5. FIG. 5 is an example of a functional block diagram when functions of the first terminal device 10, the second terminal device 20, the third terminal device 30, the electronic device 40, and the information processing system 50 are described while being divided into blocks.

### First Terminal Device

The first terminal device 10 includes a first communication unit 12, a display controller 13, and an operation receiving unit 14. The first terminal device 10 executes a program (for example, a Web browser 11) to implement functional blocks as illustrated in FIG. 5.

The first communication unit 12 communicates with the information processing system 50 to receive screen information for the first terminal device 10 to display a login screen, a menu screen of a tenant administrator, an application use permission setting (user) screen, a confirmation screen after application use permission setting (user), an application use permission setting (device) screen, and a confirmation screen after application use permission setting (device). The first communication unit 12 transmits information input to these screens by a tenant administrator to the information processing system 50.

The display controller 13 analyzes screen information on a screen received from the information processing system 50 and displays, for example, the screen on the display 506. The operation receiving unit 14 receives an operation (input to each screen) of the tenant administrator on the first terminal device 10.

### Second Terminal Device

The second terminal device 20 includes a second communication unit 22, a display controller 23, and an operation receiving unit 24. The second terminal device 20 executes a program (for example, a Web browser 21) to implement functional blocks as illustrated in FIG. 5.

The second communication unit 22 communicates with the information processing system 50 and receives screen information for the second terminal device 20 to display a login screen or the like. The second communication unit 22 transmits information input to the screen by a user to the information processing system 50.

The display controller 23 analyzes screen information on a screen received from the information processing system 50 and displays, for example, the screen on the display 506. The operation receiving unit 24 receives an operation of the user on the second terminal device 20.

### Third Terminal Device

The third terminal device 30 includes a third communication unit 32, a display controller 33, and an operation receiving unit 34. The third terminal device 30 executes a program (for example, a Web browser 31) to implement functional blocks as illustrated in FIG. 5.

The third communication unit 32 communicates with the information processing system 50, and receives screen information for the third terminal device 30 to display a login screen, a menu screen for a person in charge of work, a package information input screen, an application selection screen, a license definition creation screen, a tenant list screen, a package selection screen, and a contract information input screen. The third communication unit 32 transmits information input to these screens by a person in charge of work, to the information processing system 50.

The display controller 33 analyzes screen information on a screen received from the information processing system 50 and displays, for example, the screen on the display 506. The operation receiving unit 24 receives an operation of the person in charge of work on the third terminal device 30.

### Electronic Device

The electronic device 40 includes a fourth communication unit 42, a display controller 43, and an operation receiving unit 44. The electronic device 40 executes a program (for example, a Web browser 41) to implement functional blocks as illustrated in FIG. 5.

The fourth communication unit 42 communicates with the information processing system 50 and receives screen information for the electronic device 40 to display a login screen, an application list screen, an application screen, and so forth. The fourth communication unit 42 transmits information input to the screen by a user to the information processing system 50.

The display controller 43 analyzes screen information on a screen received from the information processing system 50 and displays the screen on the operation panel 940. The operation receiving unit 44 receives an operation (for example, activation of a screen, input of account information, selection of an application, an operation on an application, or the like) of the user on the electronic device 40.

### Information Processing System

The information processing system 50 includes a fifth communication unit 52, an authentication unit 53, a tenant management unit 54, a contract management unit 55, an application management unit 56, a license management unit 57, a user management unit 58, and a device management unit 59. These functions of the information processing system 50 are functions or means implemented by the CPU 501 of the computer 500 illustrated in FIG. 3 executing a program developed from the HD 504 into the RAM 503.

Referring to FIG. 5, while the information processing system 50 has respective functions for convenience of drawing, the functions may be distributed and arranged in a plurality of information processing devices.

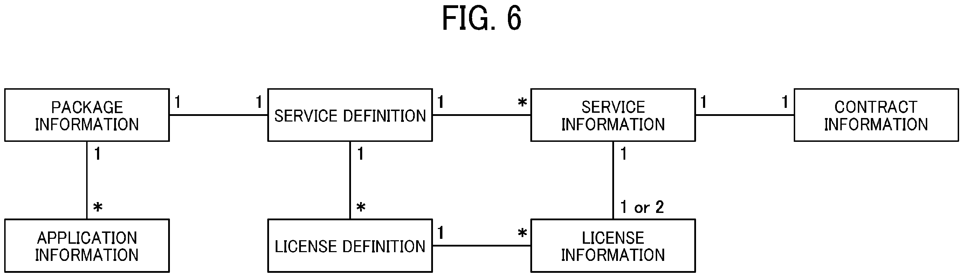

The information processing system 50 includes a memory 60 implemented by the HD 504, the RAM 503, or the like illustrated in FIG. 3. The memory 60 includes a package information storage unit 601, a user information storage unit 602, an application information storage unit 603, a tenant information storage unit 604, a device information storage unit 605, a license information storage unit 606, a service definition storage unit 607, a license definition storage unit 608, a contract information storage unit 609, and a service information storage unit 610. Hereinafter, each piece of information stored in the memory 60 will be described. It should be noted that the relationship among pieces of information will be described with reference to FIG. 6.

**Table 1**

| Package information | | |
|---|---|---|
| Item | Setting value example | Description |
| Package ID | 123 | ID for specifying package |
| Package name | Sample package | Name of package |
| Description of package | This is sample package | Description about package |
| Service class | SI_00012345_11111 | Information for association with service definition |
| Application list | Application list | List of applications included in package |
| ... | ... | |

Table 1 presents outline of package information stored in the package information storage unit 601. A package is one or more applications sold as a set. A set may include one application, or may include a plurality of applications that are collectively sold as applications frequently used for work or applications relating to each other in view of usability of the user.
Package ID: identification information for identifying a package. ID is an abbreviation of identification and represents an identifier or identification information. The ID refers to a name, code, a character string, a numerical value, or a combination of one or more of these used to uniquely distinguish a specific target from a plurality of targets.
Package name: the name of a package created by a person in charge of work.
Description of package: description of a package created by a person in charge of work. A person in charge of work can set any information.
Service class: information for association with a service definition.
Application list: identification information (application ID) of an application included in a package.

**Table 2**

| Application information | | |
|---|---|---|
| Item | Setting value example | Description |
| Application ID | APP001 | ID for specifying application |
| Application name | Scan to Email | Name of application |
| Description of application | Scan mail transmission application | Description about application |
| Application type | Authentication required | Information indicating whether authentication is required at time of use of application |
| ... | ... | |

Table 2 presents outline of application information stored in the application information storage unit 603. The application information includes information relating to each application. Each application may or may not belong to a package.
Application ID: identification information on an application.
Application name: the name of an application.
Description of application: any information on what kind of application is provided.
Application type: information indicating whether authentication is required at the time of use of the application has been registered. If authentication is not required, the user is not specified, and thus the user can use the application regardless of the presence of the license.

**Table 3**

| Service definition | | |
|---|---|---|
| Item | Setting value example | Description |
| Service class | SI_00012345_11111 | ID for specifying service definition |
| Service name | Sample package | Name of service (same value as value of package is set) |
| Description of service | This is sample package | Description about service (same value as value of description of package is set) |
| Service type | Cloud application | Type of service (information indicating what kind of service is provided) |
| ... | ... | |

Table 3 presents outline of a service definition stored in the service definition storage unit 607. The service definition defines a service associated with a package.
Service class: identification information for identifying a service definition.
Service name: the name of a service. The same value as the value of the package name of the package information is set.
Description of service: description about a service. The same value as the value of the description of package of the package information is set.
Service type: information indicating what kind of service is provided. The service type may be fixed to a cloud application or may be set by a person in charge of work.

**Table 4**

| License definition | | |
|---|---|---|
| Item | Setting value example | Description |
| License code | 01234567890123 | ID for specifying license definition |
| License name | Sample license | Name of license definition |
| License type | User device license | Information indicating what kind of license definition is provided There are three types as follows: User license (license definition for limiting number of available users) Device license (license definition for limiting number of available devices) |
| | | User device license (license definition for limiting number of available users and number of available devices) *Note that the limit numbers are set when license is issued to customer and are not included in license definition |
| Service class | SI_00012345_11111 | Information for association with service definition |
| ... | ... | |

Table 4 presents outline of a license definition stored in the license definition storage unit 608. The license definition defines the content of the license of a package.
License code: identification information for identifying a license definition.
License name: the name of a license definition.
License type: information indicating what kind of license definition is provided. There are three types as follows.
(i) User license (a license definition for limiting the number of available users)
(ii) Device license (a license definition for limiting the number of available electronic devices)
(iii) User device license (a license definition for limiting the number of available users and the number of available electronic devices).
The limit numbers are set when a license is issued to a customer and are not included in a license definition.
Service class: information for association with a service definition.

**Table 5**

| Contract information | | |
|---|---|---|
| Item | Setting value example | Description |
| Tenant ID | 0123456789 | ID of tenant that has made contract |
| Contract ID | contractAABBCC | ID for specifying contract information |
| Service class | S1_00012345_11111 | Information for association with service information |
| Service name | Sample package | Name of service (same value as value of service name of service information is set) |
| Contract start date | 2019/12/10 | Date on which tenant has made contract |
| Contract end date | 2020/12/31 | Date on which contract ends |
| License use state | During use | Specification state of license There are three types as follows: |
| | | Before use |
| | | During use |
| | | End of use (license expired) |
| Use start date | 2020/01/01 | Date on which license becomes available |
| | | The date may be same as contract start date, or may be later than |
| | | contract start date on which contract is made in advance and contract is used later |
| Use end date | 2020/12/31 | Date on which license expires same as contract end date |
| Charge plan | Monthly charge | Charge plan |
| | | There are types as follows: |
| | | Monthly charge |
| | | Use-based charge |
| | | Selling |
| ... | ... | |

Table 5 presents outline of contract information stored in the contract information storage unit 609. The contract information is information relating to purchase (contract) of a package.
Tenant ID: identification information on a tenant that has made a contract to use a package.
Contract ID: identification information for identifying contract information.
Service class: information for association with service information.
Service name: the name of a service. The same value as the value of the service name of the service information is set.
Contract start date: the date on which a tenant has made a contract.
Contract end date: the date on which a contract ends.
License use state: information indicating the state of a license (before use, during use, or end of use (license expired)).
Use start date: the date on which a license becomes available. The date may be the same as the contract start date, or may be later than the contract start date on which a contract is made in advance and the contract is used later.
Use end date: the date on which a license expires. The use end date is the same as the contract end date.
Charge plan: information indicating a charge plan (monthly charge, use-based charge, selling).

**Table 6**

| Service information | | |
|---|---|---|
| Item | Setting value example | Description |
| Tenant ID | 0123456789 | ID of tenant with service issued |
| Service class | SI_00012345_11111 | ID for specifying service (same value as value of service class of service definition is set) |
| Service name | Sample package | Name of service (same value as value of service name of service definition is set) |
| Description of service | This is sample package | Description about service (same value as value of description of service of service definition is set) |
| Service type | Cloud application | Type of service (same value as value of service type of service definition is set) |
| Contract ID | contractAABBCC | ID for association with contract information |
| ... | ... | |

Table 6 presents outline of service information stored in the service information storage unit 610. The service information is information created for each tenant based on a service definition.
Tenant ID: identification information on a tenant to which a license (service) has been issued.
Service class: identification information for specifying a service. The same value as the value of the service class of the service definition is set.
Service name: the name of a service. The same value as the value of the service name of the service definition is set.
Description of service: description about a service. The same value as the value of the description of service of the service definition is set.
Service type: the type of service. The same value as the value of the service type of the service definition is set.
Contract ID: identification information on contract information is set for association with the contract information.

**Table 7**

| License information | | |
|---|---|---|
| Item | Setting value example | Description |
| Tenant ID | 01234567890 | ID of tenant with license issued |
| License code | 01230123012301 | ID for specifying license (same value as value of license code of license definition is set) |
| License name | Sample license | Name of license (same value as value of license code of license definition is set) |
| License type | User license | Information indicating what kind of license is issued There are two types as follows: |
| | | User license |
| | | Device license |
| Use start date | 2020/01/01 | Date on which license becomes available (same value as value of use start date of contract information is set) |
| Use end date | 2020/12/31 | Date on which license expires (same value as value of use end date of contract information is set) |
| Number of available users | 100 | Upper limit of number of users to which use permission can be assigned |
| | | This is set when license type is user license |
| Active user ID | user012345, user67890 | list of user IDs to which use permission has been assigned |
| | | This is set when license type is user license |
| Number of available devices | 10 | Upper limit of number of devices to which use permission can be assigned |
| | | This is set when license type is device license |
| Active device ID | device012345, device67890 | List of device IDs to which use permission has been assigned This is set when license type is device license |
| Service class | SI_00012345_11111 | Information for association with service information (same value as value of service class of license definition is set) |
| Contract ID | contractAABBCC | ID for association with contract information |
| ... | ... | |

Table 7 presents outline of license information stored in the license information storage unit 606. The license information is information created for each tenant based on the license definition.
Tenant ID: identification information on a tenant to which a license has been issued. License code: identification information for identifying a license. The same value as the value of the license code of the license definition is set.
License name: the name of a license. The same value as the value of the license name of the license definition is set.
License type: the type of an issued license (user license or device license).
Use start date: the date on which a license becomes available. The same value as the value of the use start date of the contract information is set.
Use end date: the date on which a license expires. The same value as the value of the use end date of the contract information is set.
Number of available users: the upper limit of the number of users to which use permission can be assigned. The number of available users is set when the license type is the user license or the user device license.
Active user ID: the list of user IDs to which use permission has been assigned. The active user ID is set when the license type is the user license or the user device license.
Number of available devices: the upper limit of the number of electronic devices 40 to which use permission can be assigned. This is set when the license type is the device license or the user device license.
Active device ID: the list of device IDs to which use permission has been assigned. This is set when the license type is the device license or the user device license.
Service class: information for association with the service information. The same value as the value of the service class of the license definition is set.
Contract ID: identification information for association with the contract information.

**Table 8**

| User information | | |
|---|---|---|
| Item | Setting value example | Description |
| Tenant ID | 01234567890 | ID of tenant to which user belongs |
| User ID | user012345 | ID for specifying user |
| Password | ******** | Login password |
| Last name | Ricoh | Last name of user |
| First name | Taro | First name of user |
| E-mail address | taro .ricoh@example. com | E-mail address of user |
| | | To be used at login using e-mail address |
| Role | Tenant administrator | Role of user |
| | | Either of tenant administrator or general user |
| ... | ... | |

Table 8 presents outline of user information stored in the user information storage unit 602. The number of pieces of user information is equal to the number of users belonging to a tenant. The users of the user information storage unit 602 include a tenant administrator.
Tenant ID: identification information on a tenant to which a user belongs.
User ID: identification information on a user.
Password: secret information for certifying a user.
Last name: the last name of a user.
First name: the first name of a user.
E-mail address: the e-mail address of a user.

**Table 9**

| Device information | | |
|---|---|---|
| Item | Setting value example | Description |
| Tenant ID | 01234567890 | ID of tenant to which device belongs |
| Device ID | device012345 | ID for specifying device |
| Device type | MFP | Kind of device |
| | | Either of MFP or IWB |
| Device number | MFP 1111122222 | Device number of device |
| Description of device | MFP of first development group | Description of device |
| | | freely inputtable |
| ... | ... | |

Table 9 presents outline of device information stored in the device information storage unit 605. The device information is information relatring to a device.
Tenant ID: the ID of a tenant that uses an electronic device 40 on which an application operates.
Device ID: identification information for identifying an electronic device 40. The device ID is unique in the service providing system or the tenant, and is given from the service providing system.
Device type: the type of an electronic device 40 such as a MFP or an electronic whiteboard.
Device number: the device number (identification information) of an electronic device 40.
The device number is determined at the time of shipment, is fixed to the electronic device 40, and does not change.
Description of device: description of a device. Any information can be input.

**Table 10**

| Tenant information | |
|---|---|
| Item | Description |
| Tenant ID | Identification information on tenant |
| Tenant name | Name of tenant or the like (name of customer) |
| Registration date | This is also registration date of tenant |

Table 10 presents outline of tenant information stored in the tenant information storage unit 604. The tenant information includes items of a tenant name and a registration date in association with a tenant ID.
Tenant ID: identification information on a tenant.
Tenant name: the name of a tenant, which is a company name or a department name.
Registration date: the registration date of a tenant.

Tables 1 to 10 are presented for description of the present embodiment, and minor information is omitted.

### Each Function of Information Processing System 50

The fifth communication unit 52 transmits and receives various types of information to and from the first terminal device 10, the second terminal device 20, the third terminal device 30, and the electronic device 40. For example, the fifth communication unit 52 transmits screen information on a login screen, a menu screen of a tenant administrator, an application use permission setting (user) screen, a confirmation screen after the application use permission setting (user), an application use permission setting (device) screen, and a confirmation screen after the application use permission setting (device) to the first terminal device 10. The fifth communication unit 52 transmits screen information on a login screen and the like to the second terminal device 20. The fifth communication unit 52 transmits screen information on a login screen, a menu screen for a person in charge of work, a package information input screen, an application selection screen, a license definition creation screen, a tenant list screen, a package selection screen, a contract information input screen, and the like to the third terminal device 30. The fifth communication unit 52 transmits screen information on a login screen, an application list screen, an application screen, and the like to the electronic device 40. The fifth communication unit 52 receives the information input on these screens.

The authentication unit 53 authenticates a person in charge of work, a tenant administrator, and a user and determines whether the authentication succeeds or fails. Authentication refers to determining whether a person who has made a login request is a permissible person. In the case of the present embodiment, it is possible to determine whether the person has permission to use the information processing system 50, and whether the person is a person in charge of work, a user, or a tenant administrator. The success of the authentication represents that the person in charge of work, the user, or the tenant administrator is permitted to log in to the information processing system 50. Login refers to an authentication action of making an access to a resource of a system using account information registered in advance when any of various services on a computer or the Internet is used. Examples of the account information include a user ID and a password, an IC card number, or biometric authentication information.

The contract management unit 55 receives information relating to a contract for a package and registers the information in the contract information storage unit 609. The contract management unit 55 acquires contract information from the contract information storage unit 609.

The application management unit 56 registers application information on each application in the application information storage unit 603. The application management unit 56 acquires application information from the application information storage unit 603. The application management unit 56 manages the package information storage unit 601. The application management unit 56 manages default setting of the application for each user, or reflects the default setting in the application.

The license management unit 57 receives information relating to a license and registers the information in the license definition storage unit 608 and the license information storage unit 606. The license management unit 57 acquires contract information from the license definition storage unit 608 and the license information storage unit 606. The license management unit 57 manages the service definition storage unit 607 and the service information storage unit 610.

The user management unit 58 manages user information, registers user information in the user information storage unit 602, and acquires (reads) user information from the user information storage unit 602.

The device management unit 59 manages device information, registers device information in the device information storage unit 605, and acquires (reads) device information from the device information storage unit 605.

### Relationship among Pieces of Information

The relation between pieces of information described with the memory 60 is described with reference to FIG. 6. FIG. 6 is an example of an information relation diagram. A straight line connecting pieces of information in FIG. 6 represents a relation between class diagrams in unified modeling language (UML). For example, application information belongs to package information. It is found that application information and service definition information relate to each other.

Values "1", "2", and "*" on lines represent multiplicity. For example, "1" is set on the package information side because one piece of package information is present from the viewpoint of application information. In contrast, "*" is set on the application information side because N pieces of application information may be present from the viewpoint of package information.

Package information, a service definition, and a license definition are created as a set when a package is created. That is, when a person in charge of work creates package information, a service definition and a license definition are also created. Application information is created before package information is created.

### ** Package information

Package information may include a plurality of applications.

A package is on a product-sale basis, and a license is managed also on a product-sale basis.

### ** Application information

Application information has information on each application that a user can actually use. Information on each application is defined in advance.

### ** Service definition

A service definition is information defining a package as a service (product). For example, a selling method is defined.

A service definition is associated with service information and a license definition in a one-to-N correspondence.

A service definition is associated with package information in a one-to-one correspondence.

### ** License definition

A license definition is information defining what kind of license is used to manage a service. A specific selling method is defined.

A license definition includes N pieces of license information.

Service information and license information are issued when a tenant makes a contract for a license. The service information and the license information are issued for each tenant.

### ** Service information

Service information is information that is issued when a contract is made for a service. Although it is basically the same as the service definition, service information is issued for each tenant.

Service information belongs to a service definition, has a one-to-one correspondence with contract information, and has a one-to-one or one-to-two correspondence with license information.

### ** License information

License information is issued when a contract is made for a service and has the number of licenses (the number of users who can use the service, the number of electronic devices that can use the service, and so forth).

License information is issued for each tenant.

License information belongs to the license definition and is associated with the service information.

### ** Contract information

Contract information is information created at the time of contract relating to use of a package. One piece of contract information is generated when one package is purchased. Contract information has information such as when the customer has made the contract for the package.

Contract information is associated with service information in a one-to-one correspondence.

The application management unit 56 manages the package information and the application information. The license management unit 57 manages the service definition, the license definition, the service information, and the license information. The contract management unit 55 manages the contract information.

### Relation Diagram between Tenant and Contract

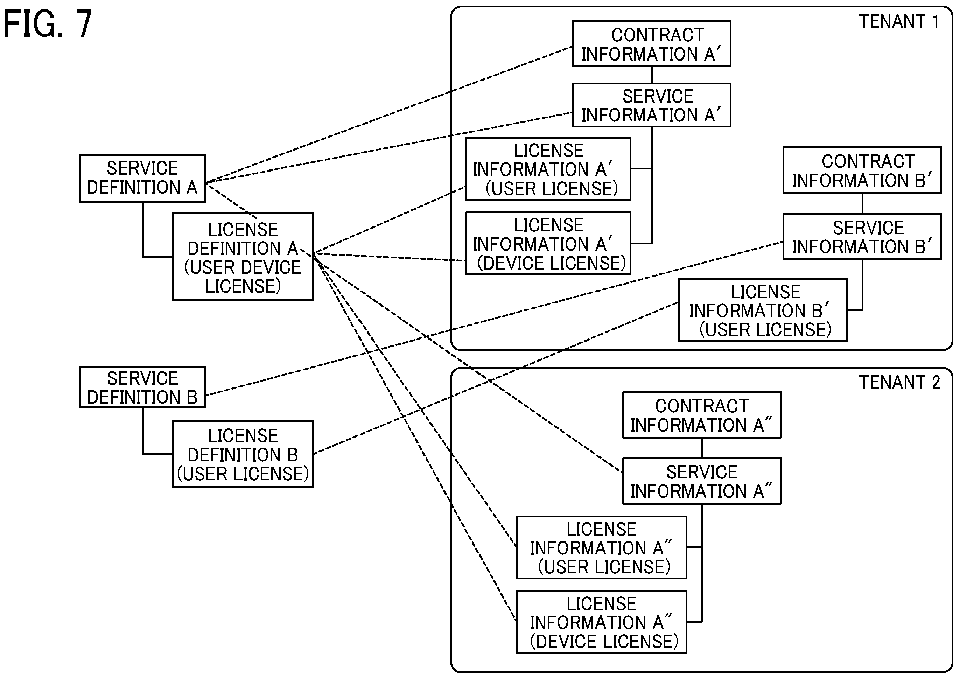

FIG. 7 illustrates relations among pieces of information when a tenant makes a contract for a package. FIG. 7 illustrates relations among pieces of information in the following contract state.

A tenant 1 has a contract for a service A and a contract for a service B.

A tenant 2 has a contract for a service A.

Service definitions A and B and license definitions A and B are used in a manner common to different tenants. Thus, the service definitions A and B and the license definitions A and B are associated with the tenants 1 and 2.

When a package is purchased, contract information, service information, and license information are generated in this order for each contract. Thus, in the tenant 1, service information A' is associated with contract information A'. Since the license definition A is a user device license, the service information A' is associated with license information A' (user license) and license information A' (device license). Contract information B' is associated with service information B'. Since the license definition B is a user license, the service information B' is associated with the license information B' (user license). Contract information A" of the tenant 2 is the same as the contract information A' of the tenant 1.

In this manner, contract information, service information, and license information are generated for each tenant in one service definition and one license definition.

### Process or Operation of Creating Package

In the following, creation of a package, purchase of a package, assignment of use permission, and use of an application will be sequentially described below.

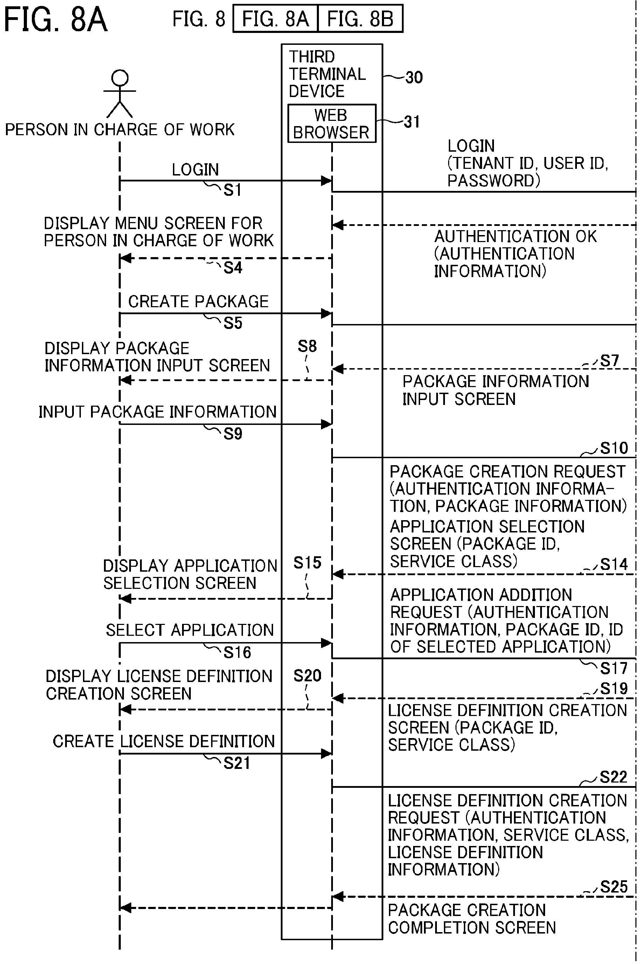

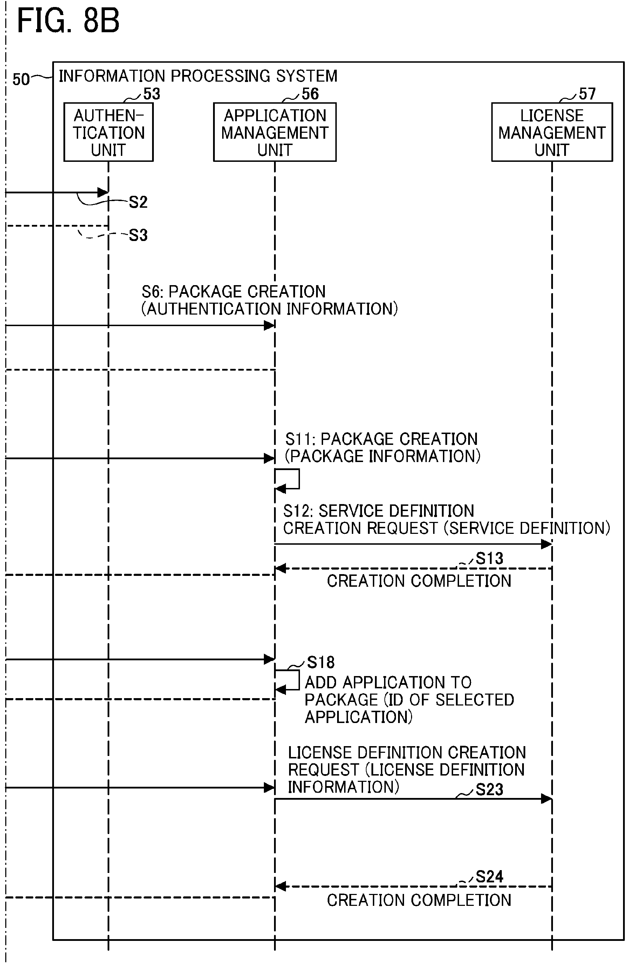

FIG. 8 is an example of a sequence diagram describing operations or processes of the service providing system 1 when a person in charge of work creates a package.

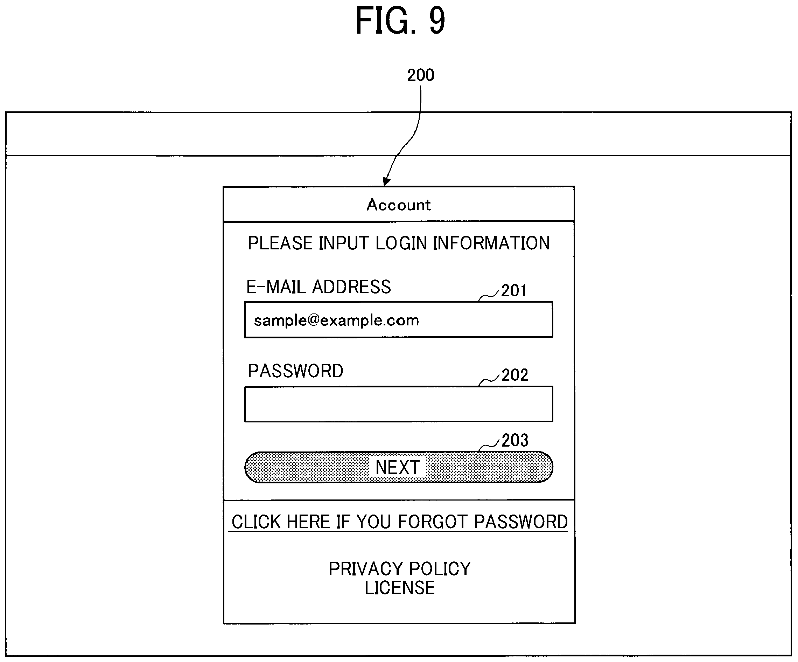

S1: A person in charge of work operates the third terminal device 30 to perform an operation of logging in to the information processing system 50. For example, account information such as an e-mail address and a password is input to a login screen. FIG. 9 illustrates an example of the login screen.

S2: The operation receiving unit 34 of the third terminal device 30 receives the operation, and the third communication unit 32 transmits a login request to the information processing system 50.

S3: The fifth communication unit 52 of the information processing system 50 receives the login request, and the authentication unit 53 authenticates the person in charge of work based on the account information. In this case, it is assumed that the authentication is successful. The authentication unit 53 transmits an authentication ticket together with authentication OK to the third terminal device 30 via the fifth communication unit 52. The authentication ticket is associated with the user who has logged in, and indicates who has logged in and what kind of process is possible for this user. When the authentication is OK, screen information on a menu screen for the person in charge of work is transmitted to the third terminal device 30.

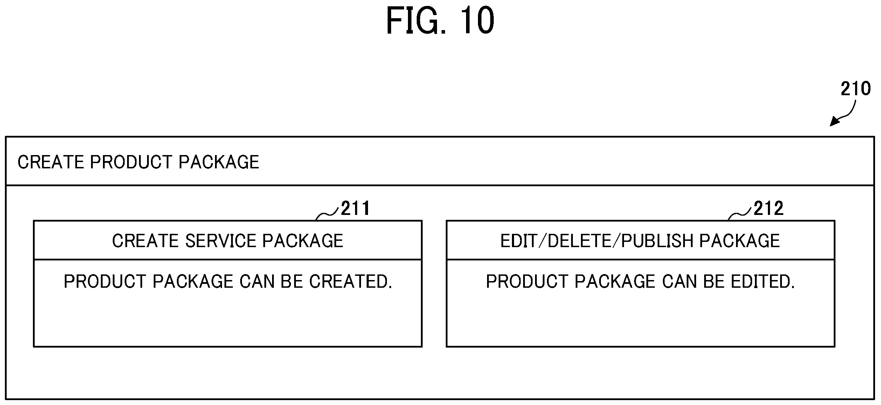

S4: The third communication unit 32 of the third terminal device 30 receives the screen information on the menu screen for the person in charge of work, and the display controller 33 displays the menu screen for the person in charge of work. FIG. 10 illustrates an example of the menu screen for the person in charge of work.

Creation of a package is permitted to a person in charge of work, and a tenant administrator or a general user is not able to set a role of a package. That is, when the authentication unit 53 authenticates that the person is a tenant administrator or a general user, the information processing system 50 does not permit creation of a package. Such a process can be implemented by such a limitation that a package information input screen is displayed when a person in charge of work logs in.

S5: The person in charge of work inputs an operation of opening a package information input screen in the menu screen for the person in charge of work to the third terminal device 30.

S6: The operation receiving unit 34 of the third terminal device 30 receives the operation, and the third communication unit 32 requests the information processing system 50 for the package information input screen.

S7: The fifth communication unit 52 of the information processing system 50 receives the request for the package information input screen, and the application management unit 56 generates screen information on the package information input screen. The application management unit 56 transmits the screen information on the package information input screen to the third terminal device 30 via the fifth communication unit 52.

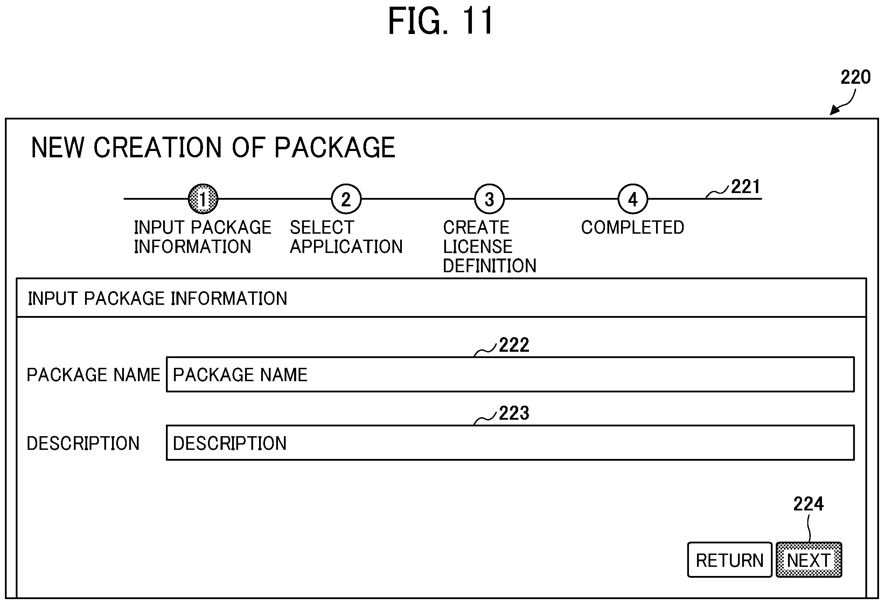

S8: The third communication unit 32 of the third terminal device 30 receives the screen information on the package information input screen, and the display controller 33 displays the package information input screen. FIG. 11 illustrates an example of the package information input screen.

S9: The person in charge of work inputs package information to the package information input screen. Information input to the package information input screen will be described with reference to FIG. 11. The operation receiving unit 34 of the third terminal device 30 receives the input, and the third communication unit 32 requests the information processing system 50 for the input package information.

S10: The fifth communication unit 52 of the information processing system 50 receives the package information.

S11: The application management unit 56 causes the package information storage unit 601 to store the package information.

S12: The application management unit 56 designates the package information and demands the license management unit 57 for a service definition creation request. The service definition is created from the package information. The service type included in the service definition may be fixed or may be input on the package information input screen.

S13: The license management unit 57 creates the service definition from the package information and causes the service definition storage unit 607 to store the service definition. The license management unit 57 transmits creation completion to the application management unit 56.

S14: Since the package is created, the application management unit 56 transmits screen information on an application selection screen for receiving an application included in the package to the third terminal device 30 via the fifth communication unit 52. A package ID and a service class are attached to the screen information on the application selection screen.

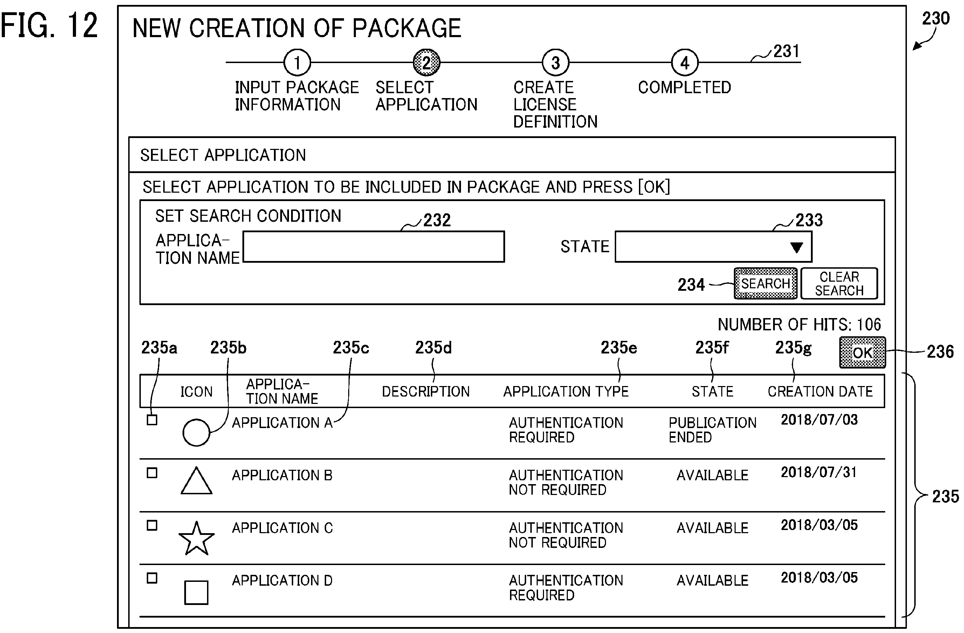

S15: The third communication unit 32 of the third terminal device 30 receives the screen information on the application selection screen, and the display controller 33 displays the application selection screen. FIG. 12 illustrates an example of the application selection screen.

S16: The person in charge of work selects an application to be included in the package from the application selection screen. The operation receiving unit 34 of the third terminal device 30 receives the selection of the application.

S17: The third communication unit 32 of the third terminal device 30 designates the authentication ticket, the package ID, and the identification information on the selected application, and demands the information processing system 50 for an application addition request.

S18: The fifth communication unit 52 of the information processing system 50 receives the application addition request, and the application management unit 56 registers the application in the package information created in step S9.

S19: Since the application has been added, the application management unit 56 transmits screen information on a license definition creation screen to the third terminal device 30. The package ID and the service class are attached to the screen information on the license definition creation screen.

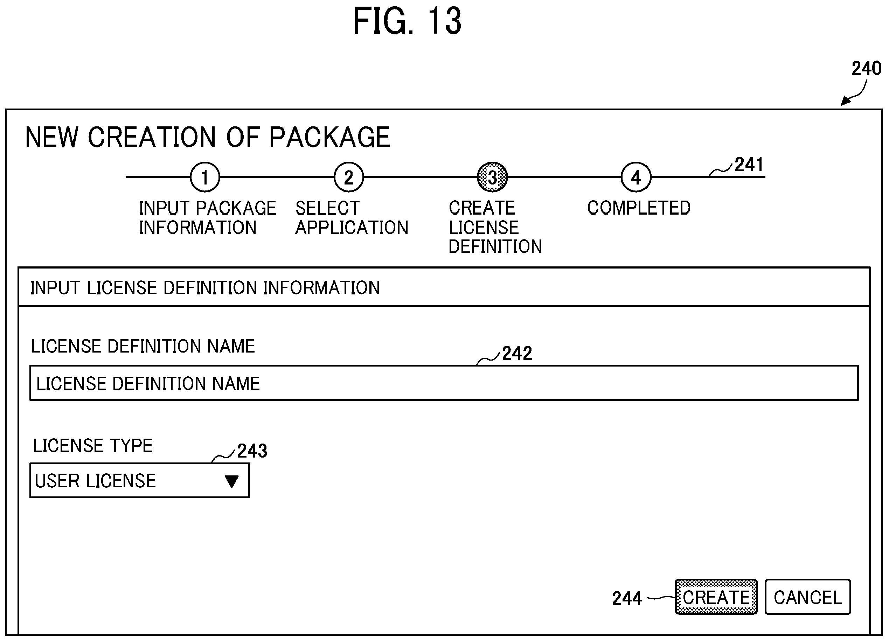

S20: The third communication unit 32 of the third terminal device 30 receives the screen information on the license definition creation screen, and the display controller 33 displays the license definition creation screen. FIG. 13 illustrates an example of the license definition creation screen.

S21: The person in charge of work inputs a license definition to the license definition creation screen.

S22: The operation receiving unit 34 of the third terminal device 30 receives the input of the license definition, and the third communication unit 32 designates the authentication ticket, the service class, and the license definition and demands the information processing system 50 for a license definition creation request.

S23: The fifth communication unit 52 of the information processing system 50 receives the license definition creation request, and the application management unit 56 designates the license definition and transmits the license definition creation request to the license management unit 57.

S24, S25: The license management unit 57 causes the license definition storage unit 608 to save the license definition including the service class. Information indicating that the license definition has been created is transmitted from the information processing system 50 to the third terminal device 30. The third terminal device 30 displays a package creation completion screen.

With the above processes, the package information, the service definition, and the license definition are created. At this time, the package information, the service definition, and the license definition are not associated with the tenant. When a tenant purchases a package (makes a contract for a license), a person in charge of work creates contract information, service information, and license information for the tenant that has purchased the package. Example of Screen Displayed by Third Terminal Device

FIG. 9 illustrates an example of the login screen. FIG. 9 illustrates an example of a login screen 200 displayed by the third terminal device 30. The login screen 200 includes an e-mail address field 201, a password field 202, and a next button 203. A person in charge of work inputs an e-mail address in the e-mail address field 201 and inputs a password in the password field 202. The e-mail address and the password are examples of account information. When the person in charge of work presses the next button 203, a login request is transmitted to the information processing system 50. Alternatively, the person in charge of work can log in with a user ID, a tenant ID, and a password. The login screen displayed by the first terminal device 10, the second terminal device 20, or the electronic device 40 may be similar to the login screen 200.

FIG. 10 is an example of a menu screen 210 for a person in charge of work displayed by the third terminal device 30. The menu screen 210 for the person in charge of work includes a package create button 211 and a package edit button 212.
The package create button 211 is a button for the person in charge of work to newly create a package.
The package edit button 212 is a button for the person in charge of work to edit an existing package.

FIG. 11 illustrates an example of a package information input screen 220 displayed by the third terminal device 30. The package information input screen 220 includes a process flow 221, a package name field 222, a description field 223, and a next button 224.
The process flow 221 indicates respective phases required to create a new package and the current phase.
The package name field 222 is a field in which the name of the package is input. The person in charge of work can input any name of the package.
The description field 223 is a field in which the description of the package is input. The person in charge of work can input any description.
The next button 224 is a button for transition to the application selection screen.

The pieces of information input to the package name field 222 and the description field 223 are set to the "package name" and the "description of package" of the package information in Table 1. The package ID is numbered and set by the application management unit 56.

FIG. 12 illustrates an example of an application selection screen 230 displayed by the third terminal device 30. The application selection screen 230 includes a process flow 231, an application name field 232, a state field 233, a search button 234, an application list field 235, and an OK button 236.
The process flow 231 is the same as that in FIG. 11, however it is indicated that the phase is "application selection".
The application name field 232 is a field in which the person in charge of work inputs a character string or a number in order to search for the name of an application desired to be included in a package.
The state field 233 is a field for the person in charge of work to designate the state of the application (available, end of publication, or the like).
The search button 234 is a button for starting a search.
The application list field 235 is a field in which the list of applications that matches (hits) the search is displayed. In the application list field 235, a check box 235a, an icon 235b of the application, an application name 235c, a description 235d, an application type 235e, a state 235f, and a creation date 235g of each application are displayed. The person in charge of work selects an application by marking the check box 235a of the application desired to be included in the package.
The OK button 236 is a button for transition to the license definition creation screen.

The application selected on the application selection screen 230 is set in the item "application list" of the package information in Table 1.

FIG. 13 illustrates an example of a license definition creation screen 240 displayed by the third terminal device 30. The license definition creation screen 240 includes a process flow 241, a license definition name field 242, a license type field 243, and a create button 244.
The process flow 241 is the same as that illustrated in FIG. 11, however indicates that the phase is "license definition creation".
The license definition name field 242 is a field for a person in charge of work to input the name of a license definition. The person in charge of work can input any name.
The license type field 243 is a field in which a user license, a device license, or a user device license is displayed in a pull-down form. The person in charge of work can select the license type from these.
The create button 244 is a button for the person in charge of work to start creating a license definition.

The pieces of information input to the license definition name field 242 and the license type field 243 are set to "license name" and "license type" of the license definition in Table 4. The license code in Table 4 is numbered by the license management unit 57, and the service class is transcribed from the service definition.

### Process at Time of Purchase of Package

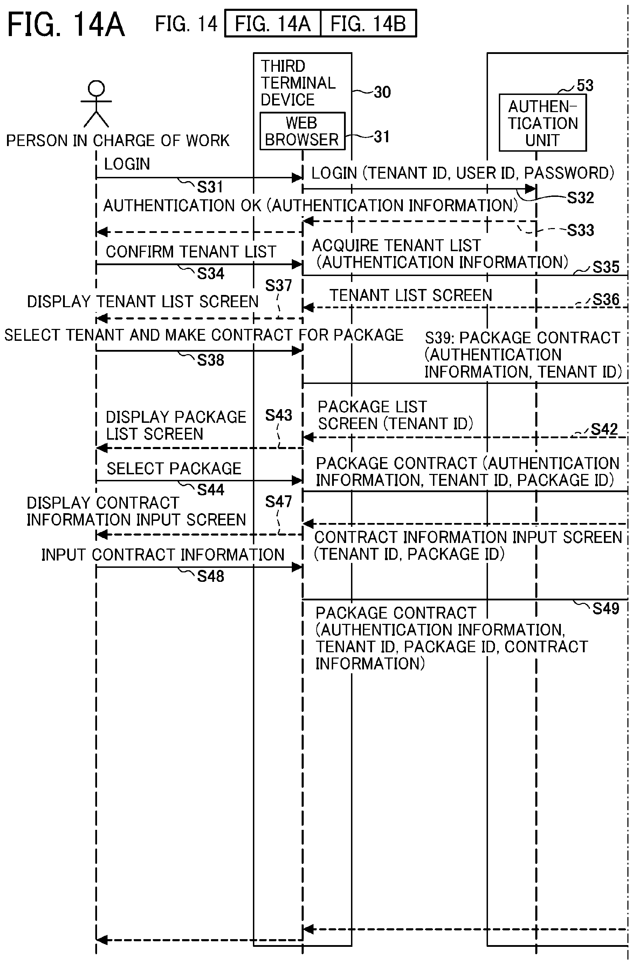

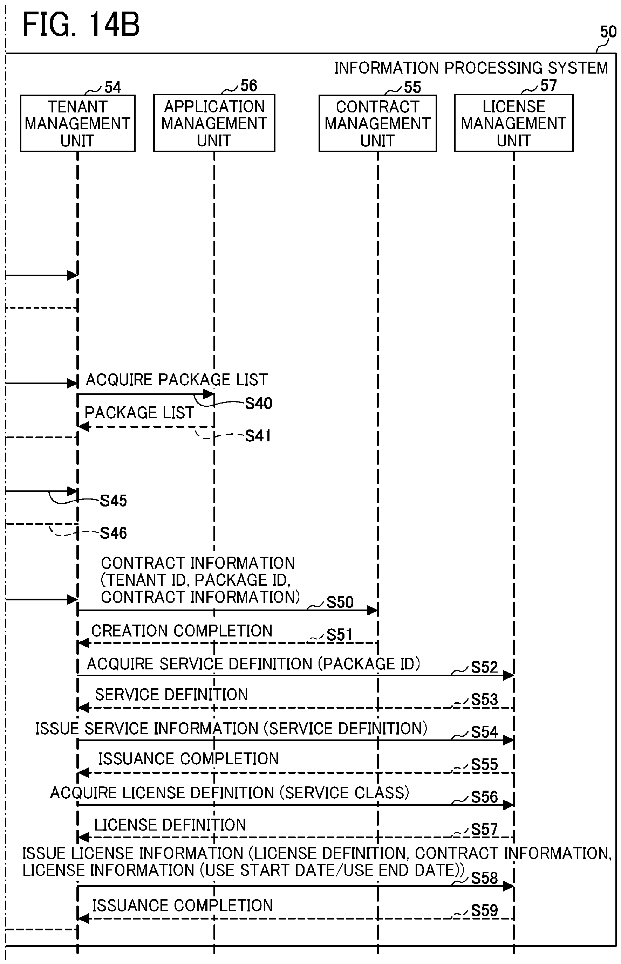

FIG. 14 is an example of a sequence diagram illustrating a procedure in which the information processing system 50 issues contract information, service information, and license information by the person in charge of work associating the tenant that has purchased a package with the package.

S31 to S33: Login may be similar to steps S1 to S3 in FIG. 8. If the person in charge of work performs an operation subsequent to FIG. 8, it is not required to log in.

S34: The person in charge of work inputs an operation of displaying a tenant list screen to the third terminal device 30.

S35: The operation receiving unit 34 of the third terminal device 30 receives the input, and the third communication unit 32 requests the information processing system 50 for a tenant information list. The fifth communication unit 52 of the information processing system 50 receives the request for the tenant information list, and the tenant management unit 54 generates screen information on a tenant list with reference to the tenant information storage unit 604. The tenant list is a list of tenants to which the person in charge of work can assign the package. A work administrator belongs to a work tenant of the service provider, and can browse any tenant created by the work administrator belonging to the work tenant.

S36: The fifth communication unit 52 of the information processing system 50 transmits the screen information on the tenant list to the third terminal device 30.

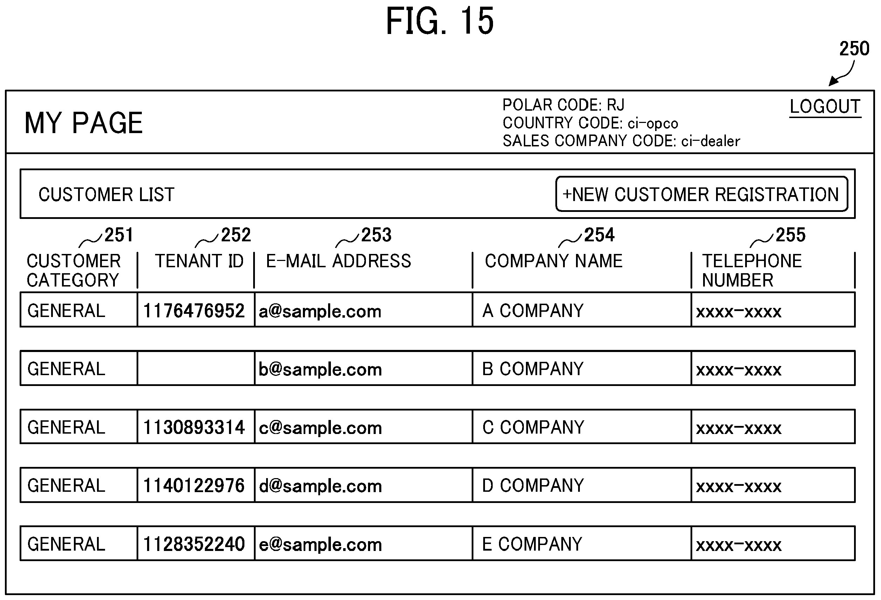

S37: The third communication unit 32 of the third terminal device 30 receives the screen information on the tenant list, and the display controller 33 displays the tenant list screen. FIG. 15 illustrates an example of the tenant list screen.

S38: The person in charge of work selects a tenant from the tenant list screen and inputs an operation of making a contract for the package.

S39: The operation receiving unit 34 of the third terminal device 30 receives the selection, and the third communication unit 32 designates the authentication ticket and the tenant ID of the tenant and requests the information processing system 50 for a package contract.

S40, S41: The fifth communication unit 52 of the information processing system 50 receives the package contract, and the tenant management unit 54 acquires a package list from the application management unit 56. The publication range of the package is a country or region such as Japan, Asia, the United States, or EU, and the tenant management unit 54 can acquire a list of packages in which the country or region to which the work tenant belongs is included in the publication range.

S42: The tenant management unit 54 generates screen information on a package list screen. The tenant management unit 54 transmits the screen information on the package list screen to the third terminal device 30 via the fifth communication unit 52.

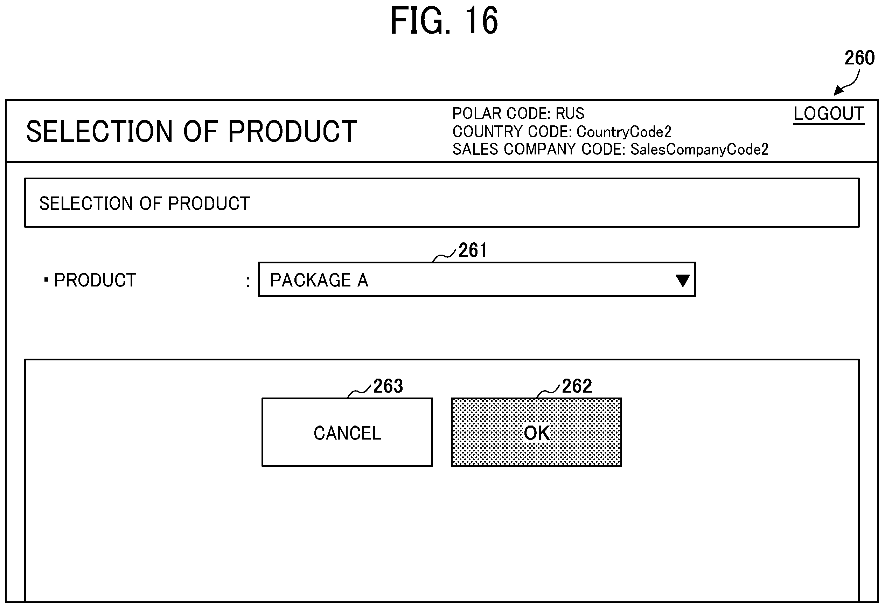

S43: The third communication unit 32 of the third terminal device 30 receives the screen information on the package list screen, and the display controller 33 of the third terminal device 30 displays the package list screen. FIG. 16 illustrates an example of the package list screen.

S44: The person in charge of work inputs an operation of selecting a package from the package list screen.

S45: The operation receiving unit 34 of the third terminal device 30 receives the operation, and the third communication unit 32 designates the authentication ticket, the tenant ID input in step S38, and the package ID selected in step S44, and requests the information processing system 50 for a package contract.

S46: The fifth communication unit 52 of the information processing system 50 receives the request for the package contract, and the tenant management unit 54 creates screen information on a contract information input screen. The fifth communication unit 52 transmits the screen information on the contract information input screen to the third terminal device 30. The tenant ID and the package ID are attached to the screen information on the contract information input screen.

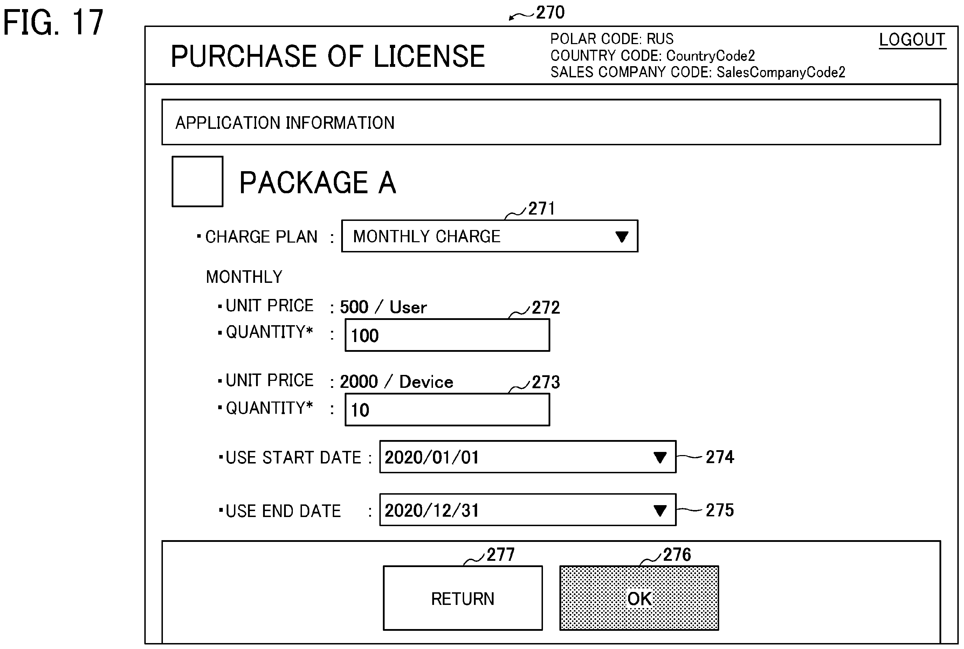

S47: The third communication unit 32 of the third terminal device 30 receives the screen information on the contract information input screen, and the display controller 33 of the third terminal device 30 displays the contract information input screen. FIG. 17 illustrates an example of the contract information input screen.

S48: The person in charge of work inputs contract information to the contract information input screen.

S49: The operation receiving unit 34 of the third terminal device 30 receives the input, and the third communication unit 32 designates the authentication ticket, the tenant ID input in step S38, the package ID selected in step S44, and the contract information, and requests the information processing system 50 for a package contract.

S50: The fifth communication unit 52 of the information processing system 50 receives the request for the package contract, and the tenant management unit 54 designates the tenant ID, the package ID, and the contract information and requests the contract management unit 55 to create contract information.

S51: The contract management unit 55 causes the contract information storage unit 609 to store the contract information, and transmits creation completion to the tenant management unit 54.

S52: The tenant management unit 54 designates the package ID and requests the license management unit 57 for a service definition.

S53: The license management unit 57 acquires the service definition specified using the package ID from the service definition storage unit 607, and transmits the service definition to the tenant management unit 54.

S54: The tenant management unit 54 designates the service definition and requests the license management unit 57 to issue service information.

S55: The license management unit 57 issues the service information using the service definition (registers the service information in the service information storage unit 610), and transmits issuance completion to the tenant management unit 54.

S56: The tenant management unit 54 designates the service class and requests the license management unit 57 to acquire a license definition.

S57: The license management unit 57 acquires the license definition specified using the service class from the license definition storage unit 608, and transmits the license definition to the tenant management unit 54.

S58: The tenant management unit 54 designates the license definition and the contract information and requests the license management unit 57 to issue license information.

S59: The license management unit 57 issues the license information using the received information (registers the license information in the license information storage unit 606), and transmits issuance completion to the tenant management unit 54. In the case of a user device license, two pieces of license information, that is, license information for a user and license information for an electronic device 40 are issued.

As described above, the service information and the license information are generated for the tenant that has purchased the package.

### Example of Screen Displayed by Third Terminal Device

FIG. 15 illustrates an example of a tenant list screen 250 displayed by the third terminal device 30. The tenant list screen 250 includes items of a customer category 251, a tenant ID 252, an e-mail address 253, a company name 254, and a telephone number 255. The customer category 251 indicates whether the customer is a general person or not (for example, test user).
The tenant ID of each tenant is displayed in the item of the tenant ID 252.
The e-mail address of the tenant administrator is displayed in the item of the e-mail address 253.
The company name of the tenant is displayed in the item of the company name 254.
The telephone number of the tenant is displayed in the item of the telephone number 255.

The company name is a link for receiving a selection, and the person in charge of work selects a tenant by selecting a company name. The tenant selected on the tenant list screen 250 is registered in the tenant ID of the contract information in Table 5. The contract ID is numbered.

FIG. 16 illustrates an example of a package selection screen 260 displayed by the third terminal device 30. The package selection screen 260 includes items of a product selection field 261, an OK button 262, and a cancel button 263.
The product selection field 261 is a field for displaying the list of packages in a pull-down form and receiving a selection of a package from the person in charge of work.
The OK button 262 is a button for starting assignment of the package selected in the product selection field 261 to the tenant.
The cancel button 263 is a button for the person in charge of work to return to the tenant list screen 250 without selecting a package.

The package information (service class, service name) of the package selected on the package selection screen 260 is transcribed to the contract information.

FIG. 17 illustrates an example of a contract information input screen 270 displayed by the third terminal device 30. The contract information input screen 270 in FIG. 17 is a screen when the license type is a user device license.

The contract information input screen 270 includes items of a charge plan field 271, a number-of-users input field 272, a number-of-devices input field 273, a use start date field 274, a use end date field 275, an OK button 276, and a return button 277.
The charge plan field 271 displays monthly charge, use-based charge, selling in a pull-down form, and receives selection of a charge plan.
The upper limit of the number of users who can use the package is input to the number-of-users input field 272.
The upper limit of the number of devices that can use the package is input to the number-of-devices input field 273.
The use start date of the package is input to the use start date field 274.
The use end date of the package is input to the use end date field 275.
The OK button 276 is a button for starting creation of contract information.
The return button 277 is a button for returning to the package selection screen 260.

The pieces of information input to the charge plan field 271, the use start date field 274, and the use end date field 275 are set in "charge plan", "use start date", and "use end date" of the contract information in Table 5. The tenant ID of the tenant selected by the person in charge of work is set as the tenant ID of the contract information in Table 5, the contract ID is numbered, the service class and the service name are transcribed from the package information, and the license use state is set from the contract start date and the contract end date.

The pieces of information input to the number-of-users input field 272 and the number-of-devices input field 273 are set to "the number of available users" and "the number of available devices" of the license information in Table 7. The pieces of information input to the use start date field 274 and the use end date field 275 are set to the use start date and the use end date of the license information in Table 7.

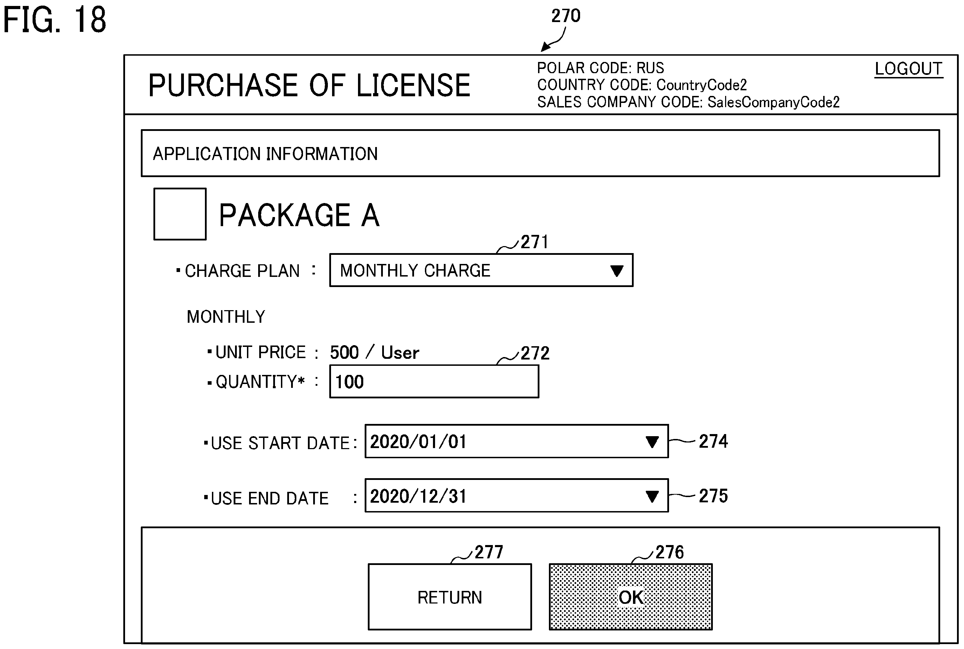

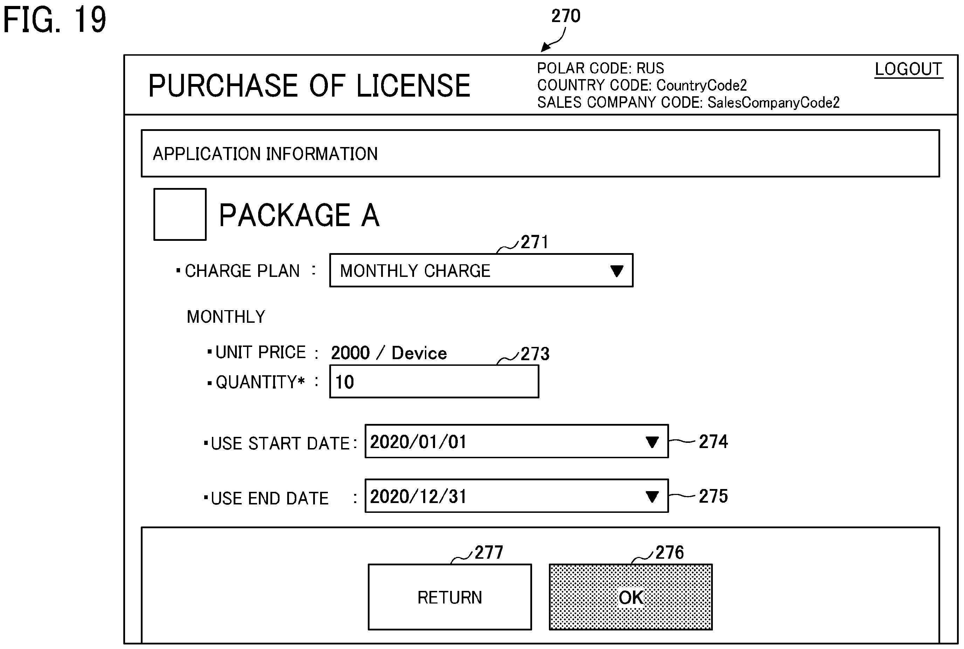

The contract information input screen 270 in FIG. 17 is a screen when the license type is the user device license. FIG. 18 illustrates a screen when the license type is the user license. In FIG. 18, the number-of-devices input field 273 does not exist. FIG. 19 illustrates a screen when the license type is the device license. In FIG. 19, the number-of-users input field 272 does not exist. In this way, the tenant management unit 54 changes the items of the contract information input screen 270 displayed by the third terminal device 30 in accordance with the license definition.

### Assignment of use permission

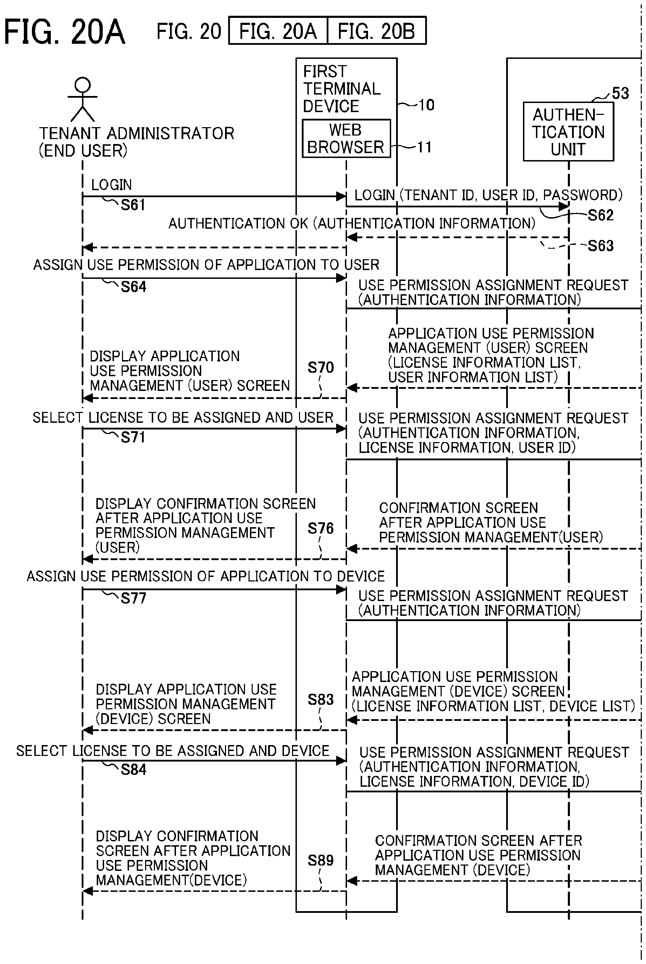

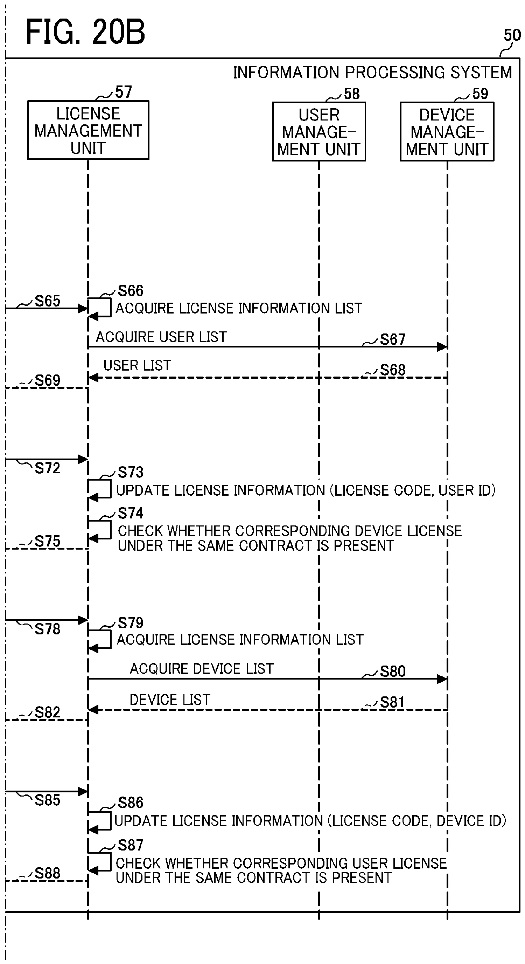

FIG. 20 is an example of a sequence diagram illustrating a procedure of a tenant administrator to assign use permission to a user and an electronic device.

S61 to S63: The login operation may be similar to steps S1 to S3 in FIG. 8.

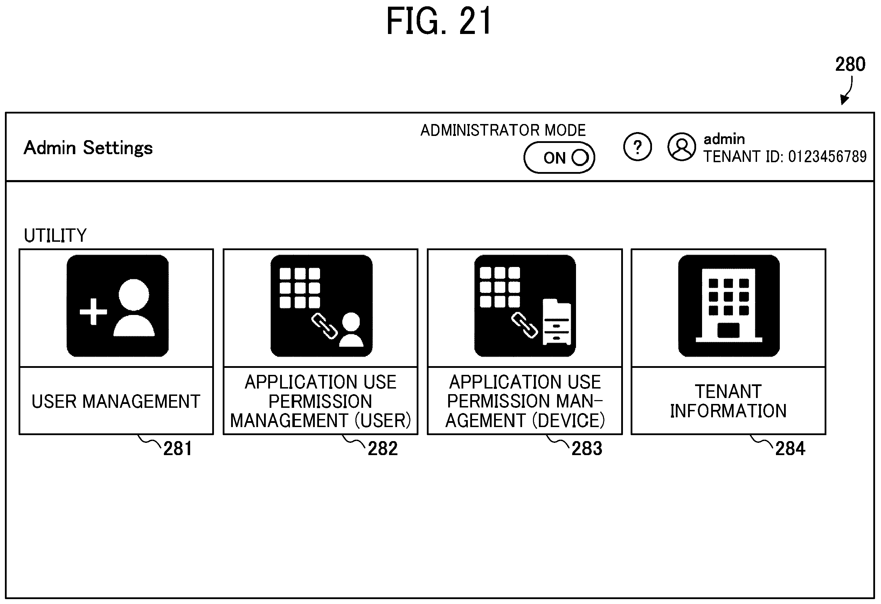

S64: In order to assign use permission of an application to a user, a tenant administrator inputs an operation of opening an application use permission management screen, using a menu screen 280 of the tenant administrator (end user) in FIG. 21, to the first terminal device 10. The application use permission management screen includes an application use permission management (user) screen relating to a user and an application use permission management (device) screen relating to a device, and any one of these may be set first.

S65: The operation receiving unit 14 of the first terminal device 10 receives the operation, and the first communication unit 12 designates the authentication ticket and transmits a use permission assignment request to the information processing system 50.

S66: The fifth communication unit 52 of the information processing system 50 receives the use permission assignment request. When the first terminal device 10 displays the application use permission management (user) screen, the license management unit 57 filters user licenses from the license information storage unit 606 to acquire a license information list.

S67, S68: The license management unit 57 acquires a list of users belonging to a tenant from the user management unit 58. That is, a list of users having the same tenant ID as the tenant administrator is acquired.

S69: The license management unit 57 transmits screen information on the application use permission management (user) screen including a license information list and a user information list to the first terminal device 10 via the fifth communication unit 52. As described later, the license management unit 57 generates a screen with a check mark given to a user whose user ID has been registered in the license information.

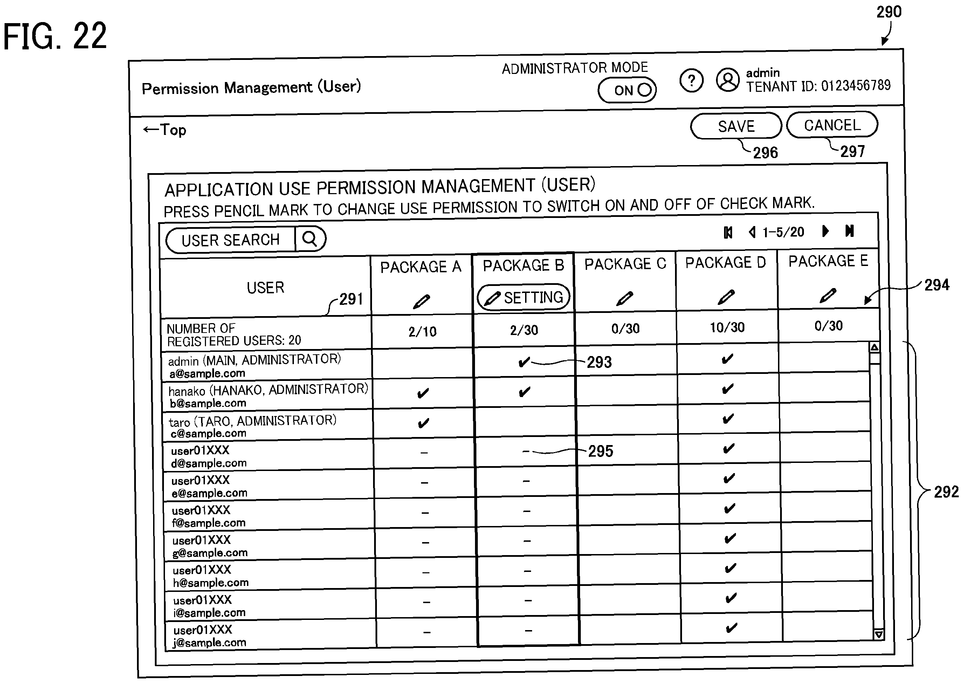

S70: The first communication unit 12 of the first terminal device 10 receives the screen information on the application use permission management (user) screen, and the display controller 13 displays the application use permission management (user) screen. FIG. 22 illustrates an example of the application use permission management (user) screen.

S71: The tenant administrator selects a license (package) to which use permission is assigned and a user from the application use permission management (user) screen. The operation receiving unit 14 of the first terminal device 10 receives the input. The operation receiving unit 14 limits the number of users to whom use permission is assigned so as not to exceed the number of available users of the license information. For example, when the number of selected users exceeds the number of available users, the display controller 13 displays an error message, and the operation receiving unit 14 does not receive selection of the user.

S72: The first communication unit 12 of the first terminal device 10 designates the authentication ticket, the license information, and the user ID, and transmits a use permission assignment request to the information processing system 50. The fifth communication unit 52 of the information processing system 50 receives the use permission assignment request. When the number of selected users exceeds the number of available users, an error message is transmitted to the first terminal device 10.

S73: The license management unit 57 registers a user ID in license information specified using license code to update the license information. The license management unit 57 also limits the number of users to whom use permission is assigned at this time so as not to exceed the number of available users of the license information. This is because use permission may be assigned from a plurality of terminal devices.

S74: The license management unit 57 determines whether a corresponding device license under the same contract is present. That is, the license management unit 57 determines whether license information whose contract ID is the same and whose license type is the device license is present. In the case of the user device license, two pieces of license information (the user license and the device license) are generated with the same contract ID. When the contract ID is the same and the license type does not include the license information on the device license, the subsequent process is not executed. Hereinafter, a case will be described in which license information whose contract ID is the same and whose license type is the device license is present. That is, the license management unit 57 determines whether a license for a particular application has been issued to both a user and an electronic device.

S75: The license management unit 57 transmits screen information on a confirmation screen after application use permission management (user) to the first terminal device 10 via the fifth communication unit 52.

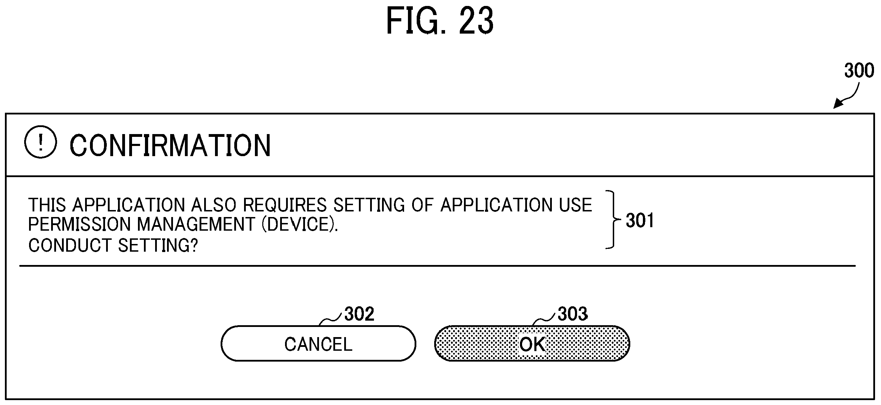

S76: The first communication unit 12 of the first terminal device 10 receives the screen information on the confirmation screen after the application use permission management (user), and the display controller 13 displays the confirmation screen after the application use permission management (user). FIG. 23 illustrates an example of the confirmation screen after the application use permission management (user).

S77: In order to assign use permission of the application to the device, the tenant administrator inputs an operation of opening the application use permission management (device) screen to the first terminal device 10.

S78: The operation receiving unit 14 of the first terminal device 10 receives the operation, and the first communication unit 12 designates the authentication ticket and transmits a use permission assignment request to the information processing system 50.

S79: The fifth communication unit 52 of the information processing system 50 receives the use permission assignment request. The license management unit 57 filters device licenses from the license information storage unit 606 to acquire a license information list.

S80, S81: The license management unit 57 acquires a list of devices included in the tenant to which the tenant administrator belongs from the device management unit 59.

S82: The license management unit 57 transmits screen information on the application use permission management (device) screen including the license information list and the device list to the first terminal device 10 via the fifth communication unit 52. As described later, the license management unit 57 generates a screen with a check mark given to the device whose device ID has been registered in the license information.

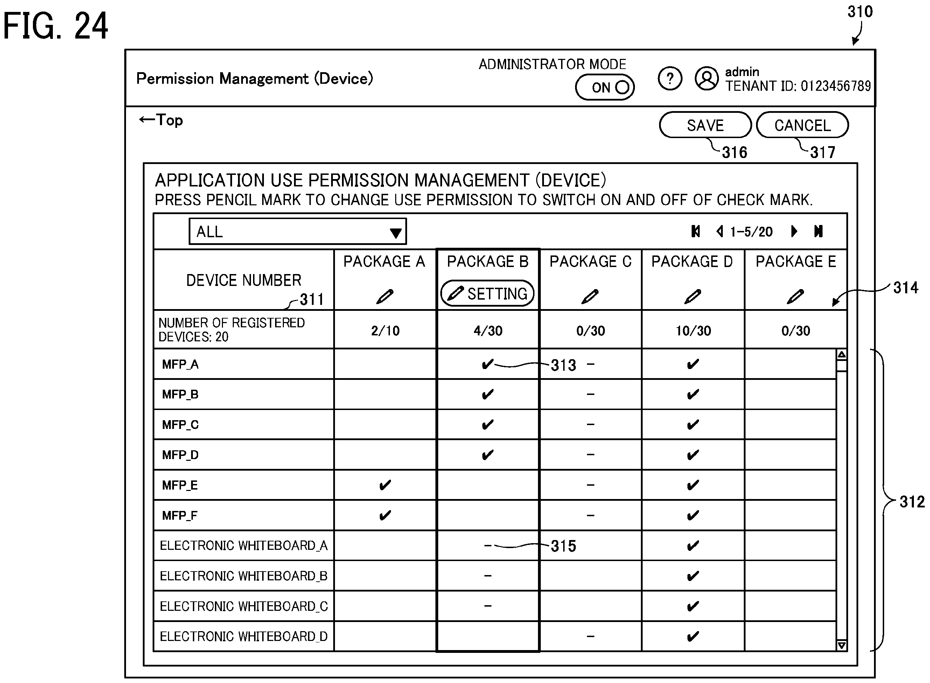

S83: The first communication unit 12 of the first terminal device 10 receives the screen information on the application use permission management (device) screen, and the display controller 13 displays the application use permission management (device) screen. FIG. 24 illustrates an example of the application use permission management (device) screen.

S84: The tenant administrator selects a license and a device to which use permission is assigned from the application use permission management (device) screen. The operation receiving unit 14 of the first terminal device 10 receives the input. The operation receiving unit 14 limits the number of devices to which use permission is assigned so as not to exceed the number of available devices of the license information.

S85: The first communication unit 12 of the first terminal device 10 designates the authentication ticket, the license information, and the device ID, and transmits a use permission assignment request to the information processing system 50. The fifth communication unit 52 of the information processing system 50 receives the use permission assignment request.

S86: The license management unit 57 registers the device ID in the license information specified using the license code to update the license information. The license management unit 57 also limits the number of electronic devices 40 to which the use permission is assigned at this time so as not to exceed the number of available devices of the license information. This is because use permission may be assigned from a plurality of terminal devices.

S87: The license management unit 57 determines whether a corresponding user license under the same contract is present. That is, it is determined whether license information whose contract ID is the same and whose license type is the user license is present. When the license information whose contract ID is the same and whose license type is the user license is present, a confirmation screen after application use permission management (device) is displayed.

S88: The license management unit 57 transmits screen information on the confirmation screen after the application use permission management (device) to the first terminal device 10 via the fifth communication unit 52.

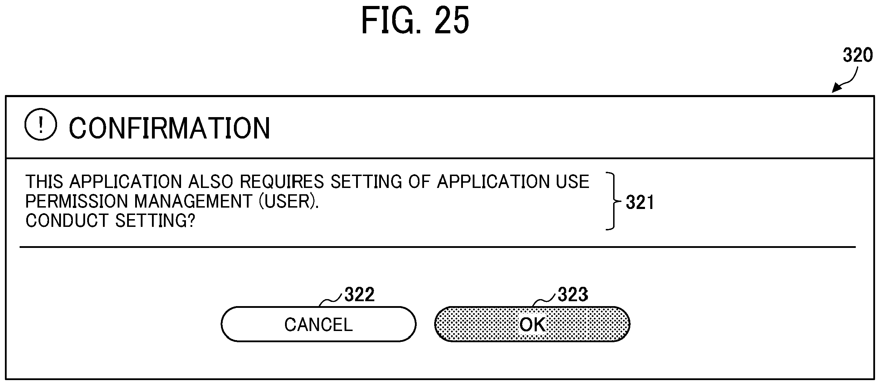

S89: The first communication unit 12 of the first terminal device 10 receives the screen information on the confirmation screen after the application use permission management (device), and the display controller 13 displays the confirmation screen after the application use permission management (device). FIG. 25 illustrates an example of the confirmation screen after the application use permission management (device). Since the application use permission management (user) screen has been set, the tenant administrator may press the cancel button.

### Example of Screen Displayed by First Terminal Device 10

FIG. 21 illustrates an example of a menu screen 280 of a tenant administrator (end user) displayed by the first terminal device 10. The menu screen 280 of the tenant administrator (end user) includes a user management button 281, an application use permission management (user) button 282, an application use permission management (device) button 283, and a tenant information button 284.
The user management button 281 is a button for displaying a user management screen for the tenant administrator to manage users.
The application use permission management (user) button 282 is a button for displaying a screen for managing which user can use which application.
The application use permission management (device) button 283 is a button for displaying a screen for managing which electronic device 40 can use an application.
The tenant information button 284 is a button for displaying a screen for displaying the contract content of the tenant.

FIG. 22 illustrates an example of an application use permission setting (user) screen 290 displayed by the first terminal device 10. The application use permission setting (user) screen 290 is a screen on which the tenant administrator assigns use permission of a package to each user. On the application use permission setting (user) screen 290, use permission 292 of each package is displayed in association with a user ID 291. The use permission 292 reflects the active user ID of the license information. Each user can use an application having a check mark 293 in the use permission 292. The number of available users (denominator) is set for each application in accordance with a use permission state 294 for each application, and the number of currently assigned licenses (numerator) is also indicated.

On the application use permission setting (user) screen 290, the tenant administrator can edit to which user use permission is set (permitted) or canceled (restricted) for each package.

A minus mark 295 indicates that the tenant administrator is not able to assign (is inhibited from assigning) use permission in the correspondence between the user and the package. Some rolls of the user are not able to use the package, and the minus mark 295 is displayed for the user. For example, when an available role is set in package information and the role is "administrator", the minus mark 295 is displayed in association with a general user on the application use permission setting (user) screen 290. In contrast, a user who is blank on the application use permission setting (user) screen 290 is a user to which use permission has not been given yet.

A save button 296 is a button for the first terminal device 10 to request the information processing system 50 to assign a license. A cancel button 297 is a button for returning to the menu screen 280 of the tenant administrator (end user).

The user ID selected on the application use permission setting (user) screen 290 is set in the item of the "active user ID" of the license information.

The tenant ID of the license information is transcribed from the contract information, and license code, a license name, a license type, a use start date, and a use end date are the same as those of the license definition. A service class and a contract ID are the same as those of the contract information.

FIG. 23 illustrates an example of a confirmation screen 300 after the application use permission setting (user) displayed by the first terminal device 10. The confirmation screen 300 after the application use permission setting (user) includes a message 301 "This application also requires setting of application use permission management (device). Conduct setting?"; a cancel button 302, and an OK button 303. The tenant administrator presses the OK button 303 with reference to the message 301 (notification indicating that the use permission of the application is required to be assigned to the electronic device) to display the application use permission setting (device) screen. The cancel button 302 is a button for returning to the menu screen 280 of the tenant administrator (end user).

FIG. 24 illustrates an example of an application use permission setting (device) screen 310 displayed by the first terminal device 10. Here, only features different from those in FIG. 22 are mainly described with reference to FIG. 24. In the application use permission setting (device) screen 310 of FIG. 24, a use permission 312 of each package is displayed in association with a device ID 311 instead of the user ID 291 of the application use permission setting screen 290 in FIG. 22. Other configurations (such as check mark 313, use permission state 314, and minus mark 315) may be the same as those (such as check mark 293, use permission state 294, and minus mark 295) in FIG. 22.

The device ID selected on the application use permission setting (device) screen 310 is set in the item "active device ID" of the license information.

FIG. 25 illustrates an example of a confirmation screen 320 after the application use permission setting (device) displayed by the first terminal device 10. The confirmation screen 320 after the application use permission setting (device) includes a message 321 "This application also requires setting of application use permission management (user). Conduct setting?"; a cancel button 322, and an OK button 323. The tenant administrator presses the OK button 323 to display the application use permission setting (user) screen 290 with reference to the message 321 (notification indicating that the use permission of the application is required to be assigned to the user). When a cancel button 322 is pressed, the screen can return to the menu screen 280 for the tenant administrator (end user).

### Processes at Time of Use of Application

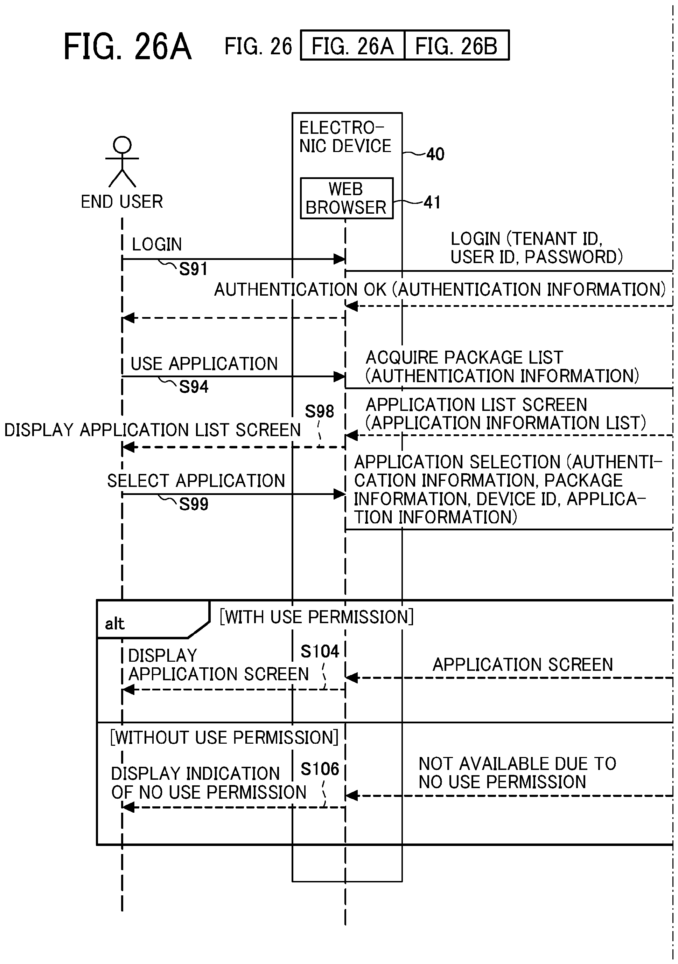

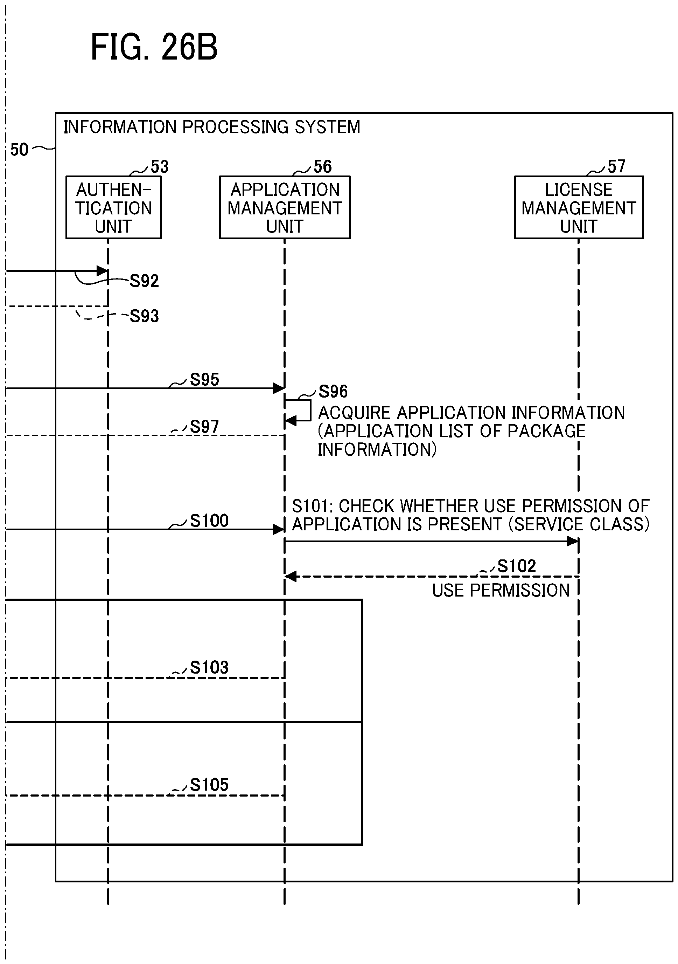

FIG. 26 is an example of a sequence diagram illustrating operations or processes when a general user uses an application from an electronic device 40. FIG. 26 illustrates a case where login to the electronic device 40 is not required but login to the information processing system 50 is required or a case where login to the information processing system 50 is also required after login to the electronic device 40.

S91 to S93: The login operation may be similar to steps S1 to S3 in FIG. 8.

S94: In order to use an application, the general user inputs an operation of using the application to the first terminal device 10.

S95: The operation receiving unit 44 of the electronic device 40 receives the operation. The fourth communication unit 42 of the electronic device 40 designates the authentication ticket and transmits a package list request to the information processing system 50.

S96: The fifth communication unit 52 of the information processing system 50 receives the package list request, and the application management unit 56 acquires an application list from package information based on the package contracted by the tenant of the general user. The tenant ID (contract information), the service information, the service definition, and the package information (application list) may be specified in this order. The presence of the use permission of the application may be determined based on the license information when the application list is displayed.

S97: The application management unit 56 generates screen information on an application list screen, and the fifth communication unit 52 transmits the screen information on the application list screen to the electronic device 40.

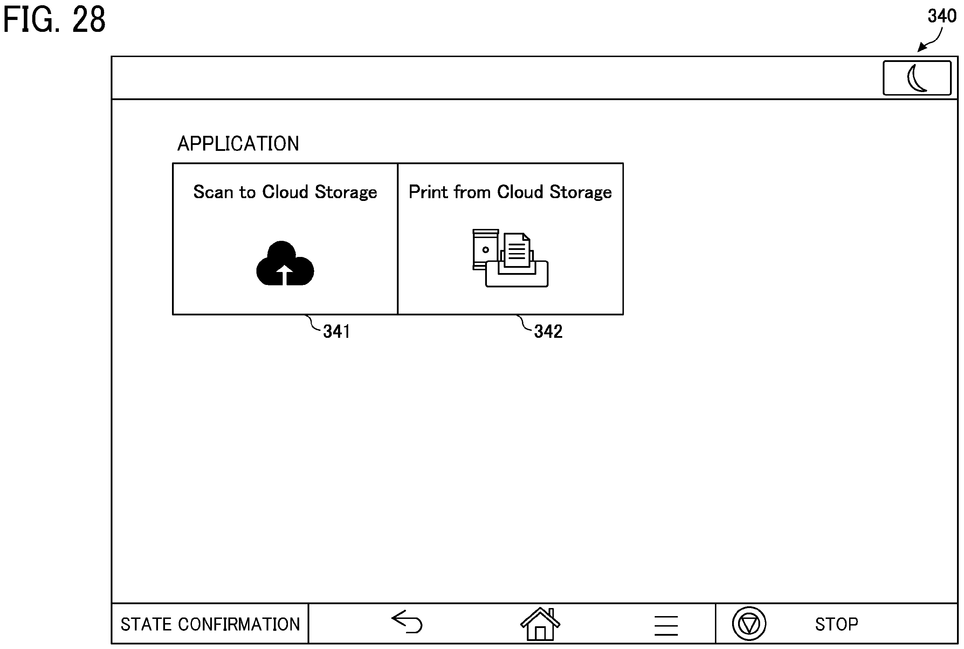

S98: The fourth communication unit 42 of the electronic device 40 receives the screen information on the application list screen, and the display controller 43 displays the application list screen. FIG. 28 illustrates an example of the application list screen.

S99: The general user selects an application to be used from the application list screen.

S 100: The operation receiving unit 44 of the electronic device 40 receives the selection. The fourth communication unit 42 of the electronic device 40 designates the authentication ticket, the package information, the device ID, and the selected application information, and transmits the application selection to the information processing system 50. The device ID is held by the electronic device 40.

S101: The fifth communication unit 52 of the information processing system 50 receives the application selection, and the application management unit 56 designates the service class and requests the license management unit 57 to determine whether the general user has use permission of the application.

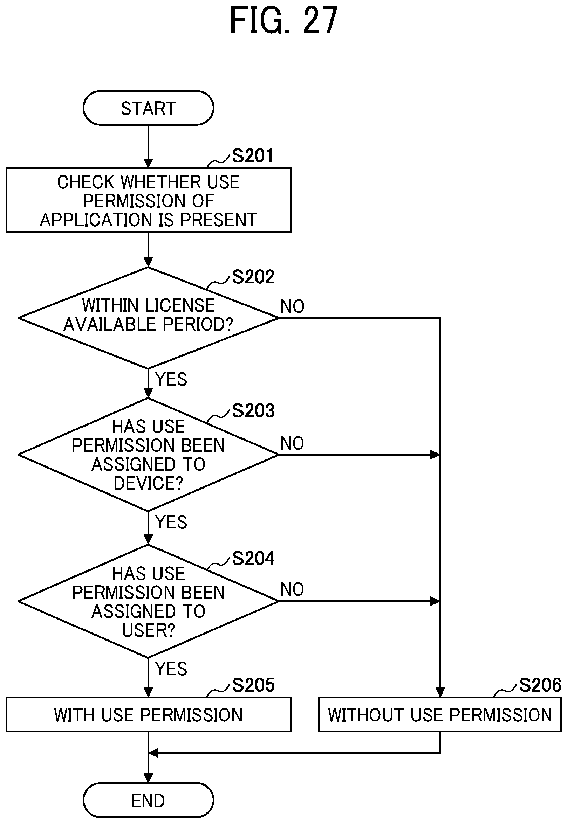

S102: The license management unit 57 specifies the license information using the service class, and confirms active users and active devices. This will be described in detail with reference to FIG. 27.

S103: When the user and the electronic device 40 have the use permission, the application management unit 56 transmits screen information on an application screen to the electronic device 40 via the fifth communication unit 52.

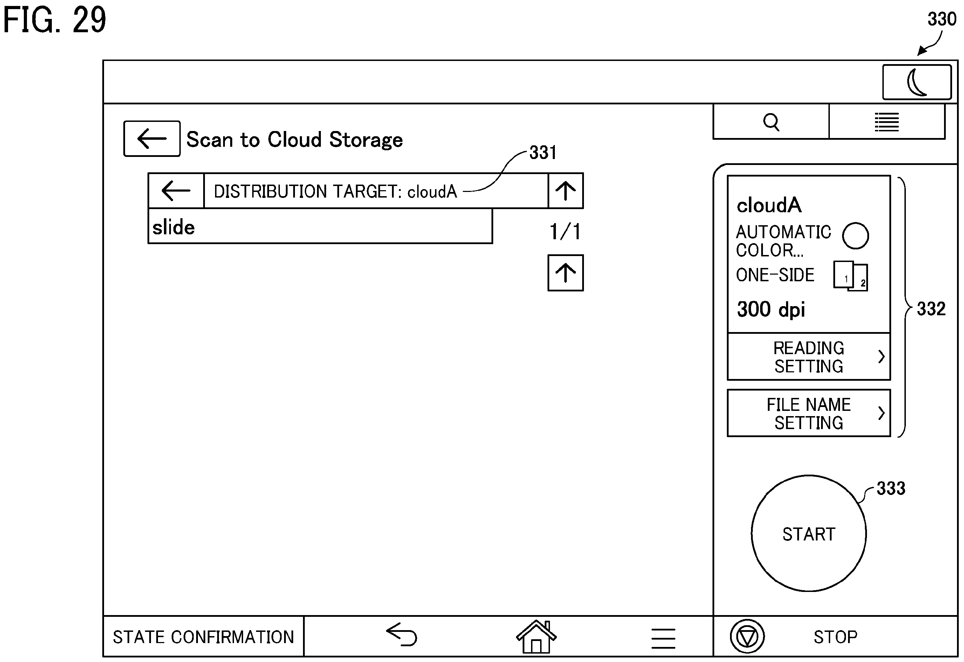

S104: The display controller 43 of the electronic device 40 displays the application screen. FIG. 29 illustrates an example of the application screen.

S 105: When the use permission of the application has not been assigned to at least one of the user and the electronic device, the application management unit 56 transmits (makes a notification of), to the electronic device 40, a situation that the application is not able to be used because there is no use permission via the fifth communication unit 52.

S106: The electronic device 40 displays a message indicating that the electronic device 40 has not been registered in the license information, a message indicating that the user has not been registered in the license information, or a message indicating that both have no use permission. When it is displayed that the electronic device 40 has not been registered in the license information, the electronic device 40 may display a transition button to the application use permission setting (device) screen 310. When it is displayed that the user has not been registered in the license information, the electronic device 40 may display a transition button to the application use permission setting (user) screen 290.

FIG. 27 is an example of a flowchart for explaining the process of step S102 in FIG. 26. The license management unit 57 checks whether there is use permission of the application with reference to the license information (S201). The use permission is checked by determining whether the use permission is within the available period (S202). When the use permission is not within the available period, the process proceeds to step S206.

When the use permission is within the available period, the license management unit 57 determines whether the use permission has been assigned to the electronic device 40 (S203). That is, it is determined whether the device ID transmitted from the electronic device 40 has been registered in the active device ID of the license information. When the use permission has not been assigned to the electronic device 40, the process proceeds to step S206.

When the use permission has been assigned to the electronic device 40, the license management unit 57 determines whether the use permission has been assigned to the user (S204). That is, the user is specified based on the authentication ticket transmitted from the electronic device 40, and it is determined whether the user ID has been registered in the active user ID of the license information. When the use permission has not been assigned to the user, the process proceeds to step S206.

When the use permission has been assigned to the user, the license management unit 57 determines that the user can use the electronic device 40 (use is permitted) (S205). In step S206, it is determined that the user is not able to use the electronic device 40 (use is restricted) (S206).

### Example of Screen Displayed by Electronic Device

FIG. 28 is a diagram illustrating an example of an application list screen 340 displayed by the electronic device 40 to which a general user has logged in. The application list screen 340 displays a list of applications of which user permission has been given to the logged-in user. In FIG. 28, applications named "Scan to Cloud Storage" 341 and "Print From Cloud Storage" 342 are displayed.

FIG. 29 is a diagram illustrating an example of an application screen 330 displayed by the electronic device 40. The application screen 330 of "Scan to Cloud Storage" is illustrated. The application screen 330 includes a distribution destination field 331, a print setting field 332, and a start button 333.
The distribution destination field 331 is a storage location (uniform resource locator (URL) or folder) mainly on the cloud set in advance in the application information.
In the print setting field 332, a scan condition of a document is set.
The start button 333 is a button for starting execution of the application.

### Another Example of Login Pattern to Electronic Device

The above description of FIG. 26 has been provided as the case where login to the electronic device 40 is not required, but login to the information processing system 50 is required, or the case where login to the information processing system 50 is required after login to the electronic device 40. Hereinafter, a case will be described in which the user logs in to the information processing system 50 automatically when the user logs in to the electronic device 40. The login account of the electronic device 40 and the login account of the information processing system 50 are associated with each other in advance.

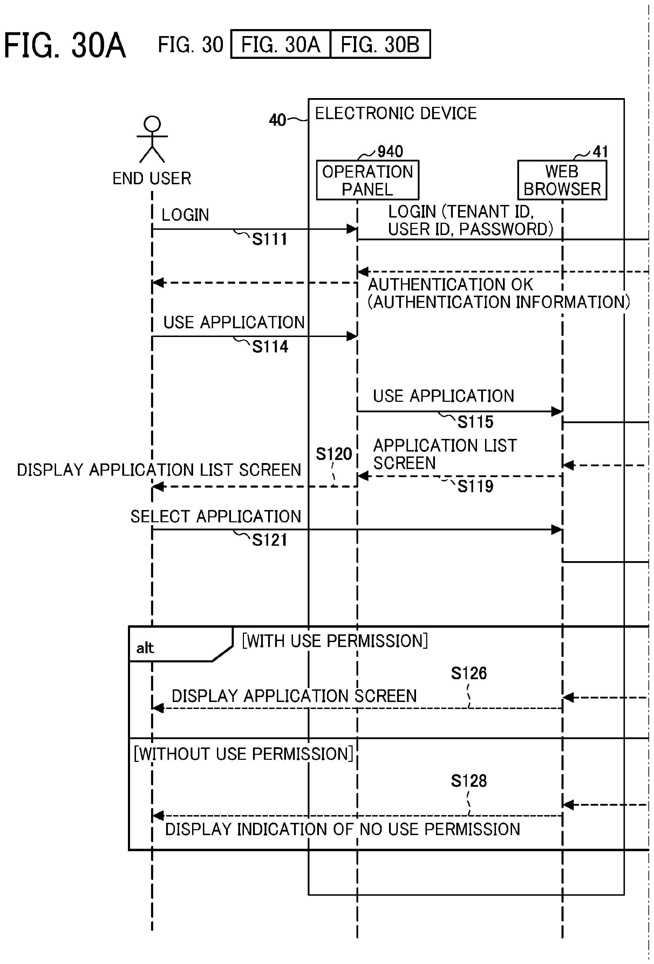

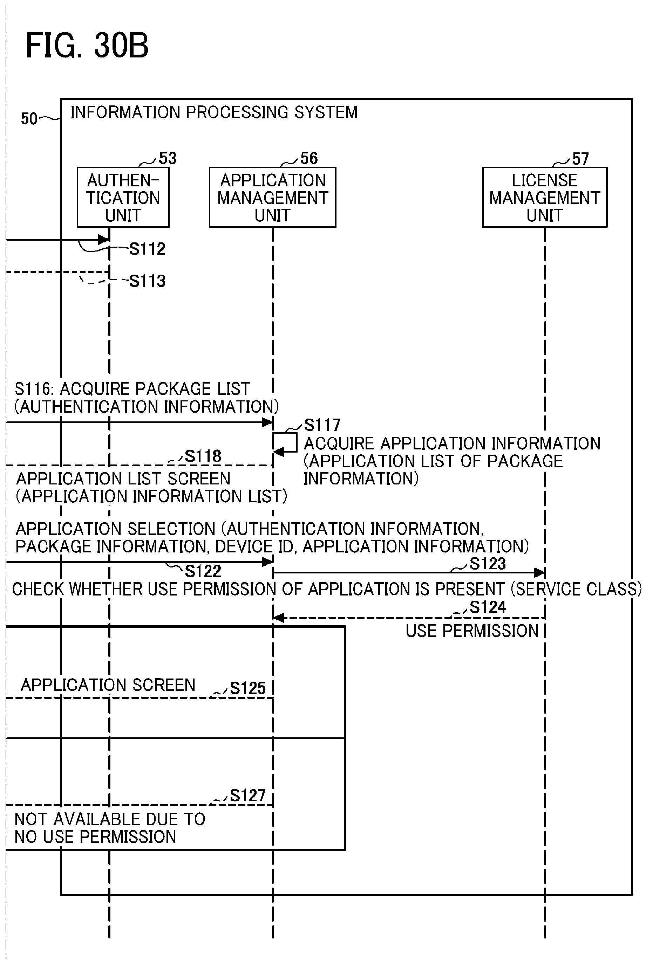

FIG. 30 is an example of a sequence diagram illustrating operations or processes when a general user uses an application from an electronic device 40. In the description with reference to FIG. 30, a difference from FIG. 26 may be described.

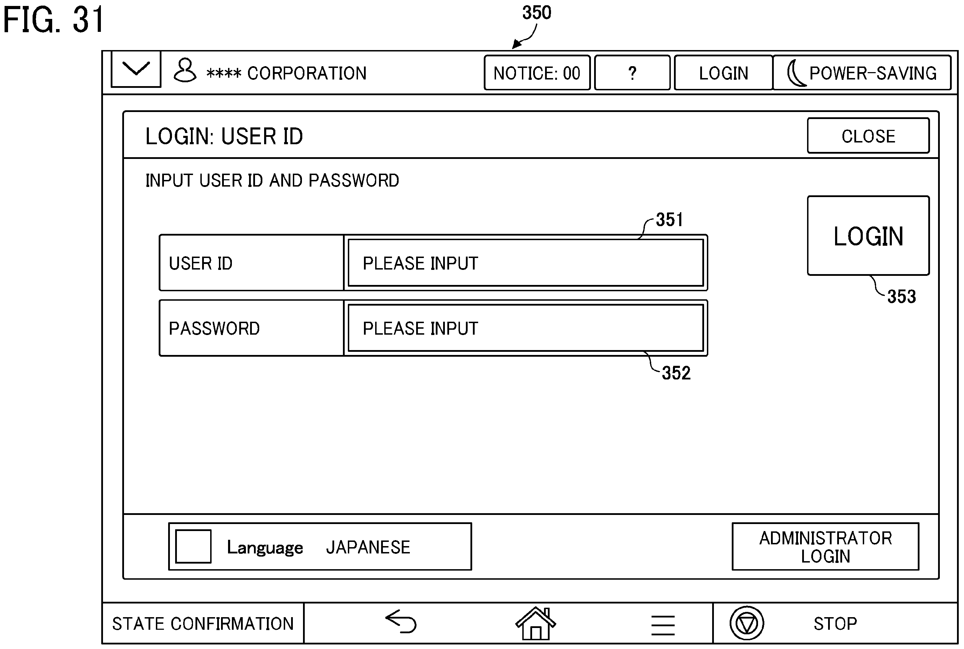

Sill: The general user performs an operation of logging in to the image forming device on the operation panel 940 of the image forming device 40a. For example, account information such as an e-mail address and a password is input to a login screen. FIG. 31 illustrates an example of the login screen.

S112: The operation panel transmits a login request to the information processing system 50 via the third communication unit 32.

S113: The fifth communication unit 52 of the information processing system 50 receives the login request, and the authentication unit 53 authenticates the general user based on the account information. In this case, it is assumed that the authentication is successful. The authentication unit 53 transmits an authentication ticket together with authentication OK to the third terminal device 30 via the fifth communication unit 52.

The subsequent steps S114 to S120 have the same flow as steps S94 to S98 in FIG. 26. However, steps S114 to S120 include processes of the general user performing the operation on the operation panel of the image forming device 40a, and the operation panel and the Web browser 41 performing communication. Steps S121 to S128 have the same flow as steps S99 to S106 in FIG. 26.

FIG. 31 illustrates an example of a login screen 350 corresponding to the login method illustrated in FIG. 30. The login screen 350 includes a user ID field 351, a password field 352, and a login button 353. The general user inputs a user ID in the user ID field 351, inputs a password in the password field 352, and presses the login button 353.

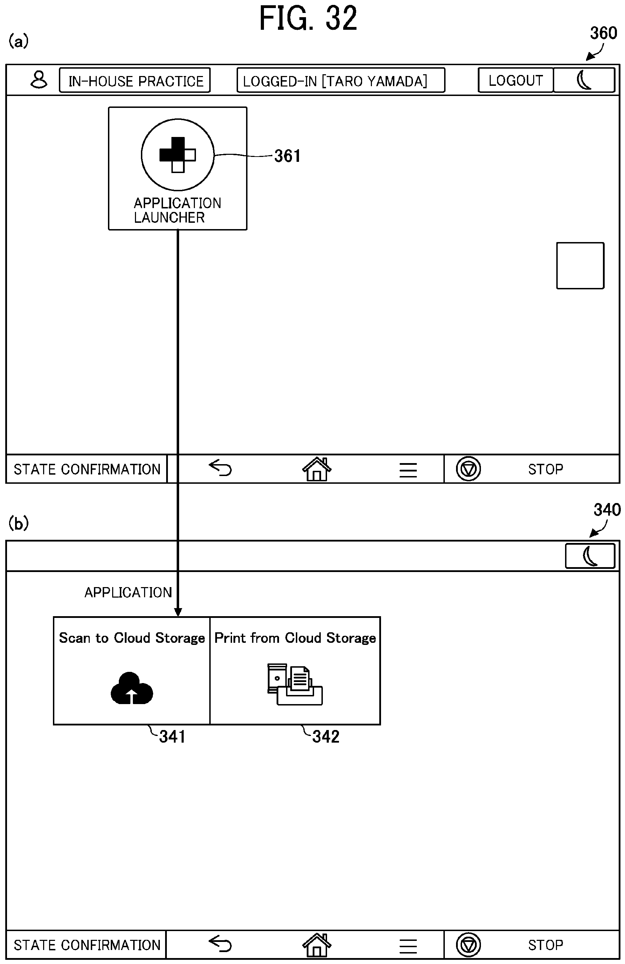

FIG. 32(a) illustrates an example of an application launcher icon screen 360 displayed when login is successful. An application launcher icon 361 is an icon for displaying a list of applications included in a package.

FIG. 32(b) illustrates an application list screen 340 displayed when the application launcher icon 361 is pressed. The application list screen may be the same as that in FIG. 28.
An application screen of FIG. 29 is displayed by selecting an application.

The flow of screen transition in FIGs. 31 and 32 includes MFP startup, login on a login screen, icon selection from an application launcher icon screen, display of a list of available applications, and use of an application.

As another pattern, the screen transition such as MFP startup, icon selection from an application launcher icon screen, login (cloud authentication) on a login screen, display of a list of available applications, and use of an application may be employed.

As described above, the service providing system 1 according to the present embodiment 1 permits use of an application based on a license relating to a user and a license relating to an electronic device 40. Thus, the information processing system 50 of the present embodiment can restrict the use permission of the application from both the license of the user and the license of the electronic device 40. Thus, it is possible to limit electronic devices capable of using the application and further limit users capable of using the application.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

For example, while each terminal device uses a general-purpose Web browser in the present embodiment, an application dedicated to the information processing system 50 may be used.

The configuration example like one illustrated in FIG. 5 is divided into blocks in accordance with main functions for easier understanding of the processes by the first terminal device 10, the second terminal device 20, the third terminal device 30, the electronic device 40, and the information processing system 50. The present disclosure is not limited by the method of dividing the unit of processing or the name of the processing. The processing of the first terminal device 10, the second terminal device 20, the third terminal device 30, the electronic device 40, and the information processing system 50 may be divided into more units of processing in accordance with the content of processing. One unit of processing may be divided so as to include more sub-units of processing.

The devices described in the examples are merely illustrative of one of a plurality of computing environments in which embodiments disclosed in the specification may be implemented. In one embodiment, an information processing system 50 includes a plurality of computing devices, such as a server cluster. The plurality of computing devices are configured to communicate with each other via any type of communication link, including a network, a shared memory, or the like and perform the processes disclosed herein.

Further, the information processing system 50 can be configured to share the disclosed processing steps, such as the sequence diagram of FIG. 8, in various combinations. For example, a process executed by a predetermined unit may be executed by a plurality of information processing devices included in the information processing system 50. The information processing system 50 may be integrated into one server device or may be divided into a plurality of devices.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A system (50) comprising:
a license management unit (57) configured to
determine whether a license for an application has been issued to both a user and an electronic device,
assign use permission of the application to each of the user and the electronic device, based on a determination that a license for the application has been issued to both the user and the electronic device, and
when use permission of the application has been assigned to both the user and the electronic device, permit the user who has logged in to the electronic device to use the application.

2. The system (50) according to claim 1, wherein
in response to the license management unit (57) assigning use permission of an application to the user, the license management unit (57) transmits to a first terminal device a notification indicating that use permission of the application is required to be assigned to the electronic device, and
in response to the license management unit (57) assigning use permission of an application to the electronic device, the license management unit (57) transmits to the first terminal device a notification indicating that use permission of the application is required to be assigned to the user.

3. The system (50) according to claim 2,
wherein, in response to the notification indicating that use permission of the application is required to be assigned to the electronic device, the license management unit (57) causes the first terminal device (10) to display a button, which displays an application use permission setting (device) screen for assigning use permission of the application to the electronic device, and
in response to the notification indicating that use permission of the application is required to be assigned to the user, the license management unit (57) causes the first terminal device (10) to display a button, which displays an application use permission setting screen for assigning use permission of the application to the user.

4. The system (50) according to claim 1 or 2, wherein when use permission of the application has not been assigned to at least one of the user and the electronic device, the license management unit (57) reports that the electronic device is not available.

5. The system (50) according to claim 3, wherein
based on the determination that a license has been issued to both the user and the electronic device, the license management unit (57) transmits screen information for displaying an input field for the number of available users and an input field for the number of available devices of the application, to the first terminal device, and
based on the determination that a license has been issued to one of the user and the electronic device, the license management unit (57) transmits screen information for displaying one of an input field for the number of available users and an input field for the number of available devices of the application, to the first terminal device.

6. The system (50) according to claim 5, wherein
based on the determination that a license has been issued to both the user and the electronic device, the license management unit (57) issues a user license and a device license for identification information under the same contract,
when the license management unit (57) has assigned use permission of an application to the user based on the user license and when the device license having identification information under the same contract is present, the license management unit (57) transmits to the first terminal device the notification indicating that use permission of the application is required to be assigned to the electronic device, and
when the license management unit (57) has assigned use permission of the application to the electronic device based on the device license and when the user license having identification information under the same contract is present, the license management unit (57) transmits to the first terminal device the notification indicating that use permission of the application is required to be assigned to the user.

7. The system (50) according to any one of claims 1 to 6, wherein
the user and the electronic device belong to a tenant, the tenant having been recorded in contract information as a tenant that purchased the application, and
the license management unit (57) assigns use permission of the application to the user and the electronic device belonging to the tenant recorded in the contract information.

8. A service providing method comprising:
determining (S74) whether a license for an application has been issued to both a user and an electronic device;
assigning (S76) use permission of the application to each of the user and the electronic device, when the determining determines that the license has been issued to both the user and the electronic device; and
permitting (S93) the user who has logged in to the electronic device to use the application, when use permission of the application has been assigned to both the user and the electronic device.

9. Carrier means carrying computer readable code for controlling a computer system to carry out the method of claim 8.
